# EUROPÄISCHE PATENTSCHRIFT

(11) **EP 3 681 674 B1**
(45) Veröffentlichungstag und Bekanntmachung des Hinweises auf die Patenterteilung: **31.05.2023**
(21) Anmeldenummer: 18745572.0
(22) Anmeldetag: 23.07.2018
(51) Int. Cl.: B24B 33/02, B24B 33/04, B24B 47/22, B23B 3/06

(54) **FEINBEARBEITUNGSMODUL FÜR EINE WERKZEUGMASCHINE UND BEARBEITUNGSVERFAHREN**
FINISHING MODULE FOR A MACHINE TOOL AND MACHINE TOOL AND MACHINING METHOD
MODULE DE FINITION POUR MACHINE-OUTIL ET PROCÉDÉ D'USINAGE

(30) Priorität: 14.09.2017 DE 102017121272
(43) Veröffentlichungstag der Anmeldung: 22.07.2020
(73) Patentinhaber: MAS GmbH, 71229 Leonberg (DE); Microcut Ltd, 2543 Lengnau (CH)
(72) Erfinder: MOERK, Thomas, 71272 Renningen (DE); MAAG, Urs, 4514 Lommiswil (CH); KOHLER, Thomas, 4562 Biberist (CH); PALUMBO, Maco, 2540 Genchen (CH)
(74) Vertreter: Ostertag & Partner Patentanwälte mbB
(86) Internationale Anmeldenummer: PCT/EP2018/069899
(87) Internationale Veröffentlichungsnummer: WO 2019/052722

(56) Entgegenhaltungen:
- EP-A1- 0 478 823
- CN-A- 104 972 384
- DE-A1- 3 424 070
- DE-A1-102012 216 360
- US-A1- 2002 090 898
- US-A1- 2010 029 179

## Beschreibung

Die vorliegende Erfindung betrifft ein Feinbearbeitungsmodul für eine Werkzeugmaschine, insbesondere eine Drehmaschine.

Ferner betrifft die vorliegende Erfindung eine Werkzeugmaschine mit einer Spanneinrichtung für ein Werkstück, das eine zu bearbeitende zylindrische Werkstückfläche aufweist, mit einem Rotationsantrieb zum Rotieren des Werkstückes um eine Bearbeitungsachse herum und mit einem Feinbearbeitungsmodul der oben genannten Art.

Schließlich betrifft die vorliegende Erfindung ein Verfahren zur Bearbeitung eines Werkstückes, insbesondere mittels einer Werkzeugmaschine der oben genannten Art.

Die vorliegende Erfindung betrifft generell das Gebiet der Feinbearbeitung von zylindrischen Werkstückflächen. Unter einer solchen Feinbearbeitung sollen vorliegend insbesondere Bearbeitungsvorgänge verstanden werden, bei denen an einem Werkstückrohling bereits mittels eines Zerspanwerkzeuges wie eines Drehwerkzeuges, eines Bohrers oder dergleichen eine zylindrische Werkstückfläche hergestellt worden ist und bei denen diese spanend (insbesondere mit definierter geometrischer Schneide) hergestellte zylindrische Werkstückfläche noch hinsichtlich ihrer Qualität zu verbessern ist. Dies kann insbesondere eine Verbesserung der Oberflächenbeschaffenheit sein, kann jedoch auch eine Verbesserung der Formhaltigkeit, der Maßhaltigkeit oder sonstiger Qualitätsmerkmale einer zylindrischen Werkstückfläche sein.

Die feinzubearbeitenden zylindrischen Werkstückflächen können auch durch Laserbearbeitung, durch Funkenerosion oder durch Abformen eines Kernes, durch Gießen, durch 3D-Druck etc. hergestellt werden.

Typische Formfehler sind Unrundheiten, Vorweiten, Welligkeiten, Konizitäten oder Bananenformen. Ferner werden häufig Werkstücke mit einer Maßhaltigkeit von wenigen Mikrometern verlangt.

Eine typische Fein- bzw. Feinstbearbeitungstechnik ist das sogenannte Honen. Das Honen gehört zu den spanenden Fertigungsverfahren mit geometrisch unbestimmter Schneide. Andere derartige Verfahren sind Schleifen, Läppen, Polieren.

Beim Honen werden häufig eine Drehbewegung, eine Vorschubbewegung und eine Radialhubbewegung miteinander kombiniert. Ein Honwerkzeug weist zu diesem Zweck häufig eine oder eine Mehrzahl von Honleisten auf, die beispielsweise mit einer Federkonstruktion radial nach außen gedrückt sein können.

Aus dem Dokument EP 1 236 539 A2 ist ein Verfahren zur Honbearbeitung bekannt, wobei mit einem Dornhonwerkzeug entweder gleich oder im Anschluss an ein Dornhonen mit dem gleichen Werkzeug eine Nachbearbeitung durchgeführt wird, bei der das Verhältnis von Hubgeschwindigkeit zur Drehzahl des Werkzeuges deutlich erhöht wird. Hierdurch soll eine bessere Kreuzstruktur der Honspuren erreicht werden, die wiederum ein besseres Ölhaltevermögen ermöglicht.

Das Dokument US 2010/0029179 A1 offenbart ein Honsystem für eine Werkstückbohrung, mit einem Honwerkzeug, das an einer Drehspindel gelagert ist, wobei das Honwerkzeug wenigstens eine radial bewegliche Honleiste aufweist. Ein Zustellsystem beinhaltet ein bewegbares Zustellelement, das automatisch steuerbar ist, um eine Zustellkraft gegen das Honwerkzeug auszuüben, und zwar um die wenigstens eine Honleiste radial nach außen zu drücken. Das Werkzeug insgesamt kann entlang einer Bearbeitungsachse axial vorgeschoben werden. Ein hiermit durchgeführtes Honverfahren beinhaltet, das Zustellelement zum radialen Andrücken der Honleiste innerhalb der Bohrung des Werkstückes zu betätigen, während sich das Honwerkzeug dreht. Sobald ein erster Kontakt zustande gekommen ist, wird die Zustellrate verringert.

Das Dokument WO 2006/029180 A1 betrifft ebenfalls ein Verfahren, bei dem eine Honleiste auf unterschiedliche Arten betätigt werden kann, nämlich mit zwei unterschiedlichen Zustellkraftniveaus.

Ferner offenbart das Dokument WO 97/26113 ein Verfahren und eine Maschine zum Bearbeiten von Löchern, und zwar insbesondere von Kleinstlöchern in beispielsweise keramischen Rohlingen. Als Honwerkzeug wird ein Draht verwendet, wobei zwischen einem Rohling und dem Draht eine oszillierende Translationsbewegung eingerichtet wird. Insbesondere wird der Draht maschinell freifliegend in das Rohloch eingeführt und entsprechend dem Bearbeitungsfortschritt relativ zum Rohling gestoßen bzw. vorgeschoben. Die Translationsbewegung kann mit einer Frequenz im Bereich von 0,1 Hz bis in den Kiloherzbereich hinein durchgeführt werden. Zug- und/oder Druckkräfte können gemessen und zur Steuerung der oszillierenden Arbeitsbewegung bzw. des Relativvorschubs zum Rohling verwendet werden. Der Draht wird automatisch aus einem Magazin ablaufend zugeführt und mit Schleifmittel versehen, bevor er in das Rohloch freifliegend eintaucht.

Das Dokument WO 01/92815 A1 offenbart eine automatische Vorrichtung für das Prüfen einer Bohrung in einem kleinen Werkstück. Ein Sensor kann dabei das Zurückweichen des Werkstückes bei einem bestimmten Prüfnadeldruck erfassen.

Das Dokument WO 01/45902 A1 offenbart eine Vorrichtung und ein Verfahren zum konzentrischen Rundschleifen eines Werkstückes.

Auch offenbart das Dokument DE 10 2012 216 360 A1 ein Honsystem, insbesondere zum Honen auf einem Bearbeitungszentrum, mit einem Werkzeugkopf, der lösbar an einer rotierend antreibbaren Maschinenspindel einer Werkzeugmaschine fixierbar ist, und mit einem Honwerkzeug, das an dem Werkzeugkopf ankoppelbar ist. Dieses Dokument stellt die Basis für den Oberbegriff des Anspruchs 1 dar. Das Honwerkzeug weist Honleisten auf, die über einen werkzeugseitigen Verstellmechanismus quer zur Drehachse verstellbar sind. Der Werkzeugkopf beinhaltet eine mit einem Stellmotor versehene Antriebseinrichtung zur Betätigung des Verstellmechanismus.

Schließlich ist es aus dem Dokument "Präzise und wirtschaftlich auch kleine Bohrungen fertigen", CH-Präzisionsfertigungstechnik 2017, 30. Juli 2017, Microcut Switzerland, und "Hochgenau in Maß und Form", Schweizer Präzisionsfertigungstechnik, 7 2017, bekannt, ein einteiliges und einlagig mit Diamant oder CBN belegtes Werkzeug (mit undefinierter Schneide), das einen konischen und einen zylindrischen Abschnitt aufweist, kraftgesteuert mit Rotations- und Translationsbewegungen in mehreren Hüben durch eine zu bearbeitende Bohrung zu treiben. Diese Hontechnik stellt eine Weiterentwicklung des Dornhonens (Einhubhonens) dar. Insbesondere ist diese Technik wirtschaftlich zur Funktionsoptimierung von kleinen und unterbrochenen Durchgangsbohrungen, insbesondere auch für harte und schwer zerspanbare Werkstoffe. Form, Oberfläche und Durchmesser einer Bohrung können prozesssicher in engste Toleranzfelder gefertigt werden. Weitere Honmaschinen sind aus der US 2010/0029179 A1 und EP 0 478 823 A1 bekannt.

Es ist daher eine Aufgabe der Erfindung, ein verbessertes Feinbearbeitungsmodul für eine Werkzeugmaschine, eine verbesserte Werkzeugmaschine sowie ein verbessertes Verfahren zur Bearbeitung eines Werkstückes anzugeben.

Die obige Aufgabe wird gelöst durch ein Feinbearbeitungsmodul für eine Werkzeugmaschine gemäß Anspruch 1, eine Werkzeugmaschine gemäß Anspruch 10 und durch ein Verfahren zur Bearbeitung eines Werkstückes gemäß Anspruch 11.

Ein Feinbearbeitungsmodul der erfindungsgemäßen Art lässt sich an einer Werkzeugmontagestelle einer Werkzeugmaschine montieren, in ähnlicher Weise wie an dieser Stelle andere Werkzeuge montiert werden können.

Die Werkzeugmaschine kann insbesondere eine Drehmaschine sein, die dazu ausgebildet ist, ein Werkstück um eine Bearbeitungsachse herum drehend anzutreiben. Ferner kann die Werkzeugmaschine dazu ausgebildet sein, das Werkstück in einer Richtung quer zu der Bearbeitungsachse hin zu einem Werkzeug zu führen, oder aber hin zu einem Feinbearbeitungsmodul, das in eine solche Werkzeugmaschine integriert ist.

Das Feinbearbeitungsmodul kann folglich ermöglichen, dass in einer Werkzeugmaschine ein Werkstück zunächst spanend bearbeitet wird, beispielsweise durch Einbringen einer Bohrung in das Werkstück mittels eines herkömmlichen Spanwerkzeuges, das eine geometrisch definierte Schneide hat.

Anschließend kann dasselbe Werkstück mit derselben Einspannung in der Spanneinrichtung mittels des Feinbearbeitungsmoduls bearbeitet werden, wobei die durch das Spanwerkzeug hergestellte zylindrische Werkstückfläche feinbearbeitet werden kann, und zwar mittels des rotationssymmetrischen Feinbearbeitungswerkzeuges.

Das Feinbearbeitungswerkzeug kann ein herkömmliches Honwerkzeug mit wenigstens einer radial nachstellbaren Honleiste sein. Ferner kann das Werkzeug ein Dornhonwerkzeug sein, das einen zylindrischen feststehenden oder hülsenartigen Honabschnitt mit einer häufig schraubenförmigen Oberflächenstruktur besitzt. Vorzugsweise ist das Feinbearbeitungswerkzeug ein einteiliges Werkzeug und weist vorzugsweise einen Konusabschnitt und einen Schaftabschnitt auf. Benachbart zu dem Schaftabschnitt und auf der dem Konusabschnitt gegenüberliegenden Längsseite kann das Feinbearbeitungswerkzeug eingespannt bzw. an dem Schlitten gelagert werden.

Durch die Werkzeugführung kann das Werkzeug exakt in Längsrichtung und konzentrisch zu der Bearbeitungsachse geführt werden. Es kann folglich ermöglicht werden, dass zylindrische Werkstückflächen hinsichtlich etwaiger Formfehler, die durch das Spanwerkzeug hervorgerufen worden sind, korrigiert werden, also insbesondere Formfehler wie Unrundheiten, Vorweiten, Welligkeiten, Konizitäten oder Bananenformen.

Ferner kann mittels des Feinbearbeitungsmoduls eine hohe Maßhaltigkeit von zylindrischen Werkstückflächen erreicht werden, in der Regel mit Toleranzen von wenigen Mikrometern.

Insgesamt kann auch eine hohe Oberflächengüte erzeugt werden.

Ein bevorzugter Aspekt des Feinbearbeitungsmoduls besteht darin, dass das Feinbearbeitungsmodul ausschließlich einen Linearantrieb für das Feinbearbeitungswerkzeug aufweist, eine Relativdrehung zwischen Werkzeug und Werkstück jedoch ausschließlich durch eine Drehung des Werkstückes eingerichtet wird.

Das Modulgehäuse kann ein im Wesentlichen geschlossenes Gehäuse sein.

Im Bereich der Werkzeugführung kann eine Kühleinrichtung vorgesehen sein. Beispielsweise kann über die Werkzeugführung flüssiges Kühl- bzw. Schmiermittel zugeführt und über geeignete Düsen auf die Oberfläche des durch die Werkzeugführung hindurchgeführten Feinbearbeitungswerkzeuges aufgebracht werden.

Mit der vorliegenden Erfindung lassen sich hohe Qualitätskriterien erfüllen, ohne dass eine Messsteuerung verwendet werden muss. Die hergestellten Werkstücke weisen hinsichtlich der Abmessungen vorzugsweise praktisch keine Streuung auf.

Das Feinbearbeiten der zylindrischen Werkstückfläche kann, wie noch ausgeführt werden wird, durch eine stetig geregelte Vorschubgeschwindigkeit erfolgen. Einer geregelten oder ungeregelten Vorschubgeschwindigkeit kann vorzugsweise eine Oszillation überlagert sein, die vorzugsweise durch eine Bewegung des Werkstückes realisiert wird.

Die Aufgabe wird somit vollkommen gelöst.

Gemäß einer bevorzugten Ausführungsform weist das Feinbearbeitungsmodul eine axiale Modullänge auf, wobei ein Verhältnis der axialen Modullänge zu einem axialen Maximalfahrweg (Hub) des Linearantriebs in einem Bereich von 1,1:1 bis 2,5:1 liegt, insbesondere in einem Bereich von 1,2:1 bis 2,2:1, besonders bevorzugt in einem Bereich von 1,2:1 bis 2:1.

Durch diese Maßnahme kann das Feinbearbeitungsmodul insgesamt axial sehr kompakt ausgebildet werden und daher auch in Werkzeugmaschinen montiert werden, die einen vergleichsweise kleinen Bearbeitungsraum aufweisen.

Gemäß einer weiteren bevorzugten Ausführungsform weist der Linearantrieb eine Linearachse für den Schlitten und einen Antriebsmotor auf. Gemäß einer weiteren bevorzugten Ausführungsform sind eine Antriebsachse eines Antriebsmotors und eine Linearachse parallel, insbesondere parallel versetzt zueinander ausgerichtet. Gemäß einer weiteren bevorzugten Ausführungsform sind ein Antriebsmotor und eine Linearachse axial überlappend angeordnet. Gemäß einer weiteren bevorzugten Ausführungsform sind ein Antriebsmotor und eine Linearachse im Bereich von einem axialen Modulende des Feinbearbeitungsmoduls über ein Zugmittelgetriebe oder einen Stirnradsatz gekoppelt. Gemäß einer weiteren bevorzugten Ausführungsform ist der Antriebsmotor ein elektrischer Linearmotor mit einem axial beweglichen Anker, der die Linearachse bildet.

Die oben genannten Maßnahmen können sämtlich dazu beitragen, dass das Feinbearbeitungsmodul axial kompakt und konstruktiv günstig aufgebaut werden kann.

Es ist ferner vorteilhaft, wenn der Schlitten an einer ersten Längsseite eine Linearachse des Linearantriebs angeordnet ist, wobei eine Steuereinrichtung an einer zweiten Längsseite der Linearachse angeordnet ist.

Hierdurch kann ebenfalls eine axial kompakte Bauweise realisiert werden.

Dabei ist es von besonderem Vorteil, wenn die zweite Längsseite, an der die Steuereinrichtung angeordnet ist, der ersten Längsseite gegenüber liegt, und/oder wenn eine flexible Kabelführung zur Verbindung der Steuereinrichtung und des Schlittens an einer dritten Längsseite angeordnet ist, die zwischen der ersten Längsseite und der zweiten Längsseite liegt.

Auch diese Maßnahmen können zu einer axial kompakten Bauweise beitragen.

Insgesamt ist es vorteilhaft, wenn der Schlitten eine Schlittenbasis und einen Schieber aufweist, der an der Schlittenbasis zumindest begrenzt axial verschieblich gelagert ist, wobei das Feinbearbeitungswerkzeug im Bereich seines ersten Werkzeugendes an dem Schieber gelagert ist.

Durch diese Maßnahme kann eine Bewegung des Schlittens von einer Bewegung des Feinbearbeitungswerkzeuges zumindest teilweise entkoppelt werden, so dass eine hohe Prozesssicherheit gegeben ist. Mit anderen Worten kann auch bei einem Blockieren des Feinbearbeitungswerkzeuges in axialer Richtung zumindest für einen begrenzten Hub die Schlittenbasis weiter bewegt werden.

Dabei ist es von besonderem Vorteil, wenn der Schieber gegenüber der Schlittenbasis axial vorgespannt ist und/oder wenn eine axiale Verschiebung des Schiebers in Bezug auf die Schlittenbasis mittels eines Axialversatzsensors erfassbar ist.

Hierdurch kann auch eine Axialkraft gemessen werden, die zwischen dem Feinbearbeitungswerkzeug und dem Werkstück während der Feinbearbeitung wirkt.

Ferner ist es insgesamt vorteilhaft, wenn das erste Werkzeugende des Feinbearbeitungswerkzeuges an dem Schlitten zumindest begrenzt verdrehbar gelagert ist und/oder wenn eine Verdrehung des ersten Werkzeugendes des Feinbearbeitungswerkzeuges gegenüber dem Schlitten mittels eines Verdrehsensors erfassbar ist.

Durch diese Maßnahme kann ein Drehmoment erfasst werden, das zwischen dem Feinbearbeitungswerkzeug und dem Werkstück während des Feinbearbeitungsprozesses wirkt.

Ferner ist es insgesamt vorteilhaft, wenn das Feinbearbeitungswerkzeug im Bereich des ersten Werkzeugendes kardanisch an dem Schlitten gelagert ist.

Durch diese Maßnahme kann das in der Regel relativ lange Feinbearbeitungswerkzeug sich zwischen dem Schlitten und der Werkzeugführung an dem Modulgehäuse leicht verbiegen, so dass auch bei nicht hundertprozentig konzentrisch angeordneten Werkstücken zu der Längsachs des Feinbearbeitungswerkzeuges eine exakte und genaue Feinbearbeitung einer zylindrischen Werkstückfläche möglich ist.

Bei dem erfindungsgemäßen Verfahren ist es von besonderem Vorzug, wenn der Werkstückrohling in dem Feinbearbeitungsschritt mit einer konstanten Drehzahl angetrieben wird, die insbesondere geregelt sein kann.

Durch diese Maßnahme ist es möglich, dass das Feinbearbeitungsmodul unabhängig von der Steuereinrichtung der Werkzeugmaschine arbeiten kann, so dass kein Eingriff in die Steuerung der Werkzeugmaschine notwendig ist.

Es ist lediglich notwendig abzufragen, ob das Werkstück bereits in Drehung versetzt ist. Dies kann jedoch gegebenenfalls auch manuell erfolgen, wenn kein entsprechendes Ausgangssignal verfügbar ist.

Eine Steuereinrichtung für das Feinbearbeitungsmodul kann beispielsweise als Standsteuerung neben der Werkzeugmaschine aufgestellt werden und über ein Kabel mit dem Feinbearbeitungsmodul im Inneren eines Bearbeitungsraumes der Werkzeugmaschine verbunden sein.

Das Feinbearbeitungsmodul kann folglich im Wesentlich autark arbeiten.

Die Feinbearbeitung einer zylindrischen Werkstückfläche eines Werkstückrohlings mittels des Feinbearbeitungsmoduls erfolgt vorzugsweise mit den Schritten: Erzeugen einer Relativrotation zwischen einem Werkzeug und einem Werkstückrohling um eine Bearbeitungsachse herum, die konzentrisch ist zu einer zylindrischen Werkstückfläche des Werkstückrohlings; Erzeugen einer relativen Vorschubgeschwindigkeit zwischen dem Werkzeug und dem Werkstückrohling entlang der Bearbeitungsachse; Erfassen eines Istwertes einer Prozessgröße, die eine Funktion einer Relativkraft zwischen dem Werkzeug und dem Werkstückrohling ist und die eine Vielzahl von Prozessgrößenwerten annehmen kann; und stetiges Regeln der Prozessgröße durch Verändern der relativen Vorschubgeschwindigkeit, derart, dass die relative Vorschubgeschwindigkeit sich umso mehr ändert, je mehr der Istwert der Prozessgröße von einem Sollwert der Prozessgröße abweicht.

Hierbei kann verwendet werden eine Vorrichtung zum Bearbeiten von zylindrischen Werkstückflächen, mit einer Spanneinrichtung für ein Werkstück; mit einem Werkzeug zur Bearbeitung einer zylindrischen Werkstückfläche des Werkstückes; mit einem Rotationsantrieb, um eine Relativrotation zwischen dem Werkstück und dem Werkzeug einzurichten; mit einem Axialantrieb, um eine relative Vorschubgeschwindigkeit zwischen dem Werkstück und dem Werkzeug einzurichten; und mit einer Steuervorrichtung, die dazu eingerichtet ist, um das Feinbearbeitungsverfahren durchzuführen.

Bei dem Fein- bzw. Feinstbearbeitungsverfahren kann das verwendete Werkstück ein herkömmliches Honwerkzeug mit radial nachstellbaren Honleisten sein. Bevorzugt ist es jedoch, wenn das Feinbearbeitungswerkzeug ein einteiliges bzw. einstückiges Werkzeug ist, das im Wesentlichen dornförmig ausgebildet ist, mit einem Konusabschnitt und einem Schaftabschnitt.

Hierbei kann verwendet werden ein Feinbearbeitungswerkzeug zur Durchführung des Verfahrens, mit einem Konusabschnitt, der sich über eine erste axiale Länge erstreckt, und mit einem Schaftabschnitt, der einen einheitlichen Werkzeugdurchmesser aufweist und der sich über eine zweite axiale Länge erstreckt, wobei das Verhältnis von erster axialer Länge und zweiter axialer Länge in einem Bereich von 1:2 bis 10:1 liegt.

Die zylindrische Werkstückfläche des Werkstückrohlings bzw. Werkstückes kann eine zylindrische Außenfläche sein, ist jedoch vorzugsweise eine Bohrung. Die Werkstückfläche ist vorzugsweise mittels eines Spanwerkzeuges erzeugt worden, das eine geometrisch bestimmte Schneide hat, also beispielsweise ein Bohrer, ein Drehwerkzeug oder dergleichen.

Das Feinbearbeitungswerkzeug ist in der Regel mit einem Schleifwerkstoff beschichtet, also beispielsweise mit Diamant, CBN oder dergleichen.

Das Feinbearbeitungsverfahren wird dabei vorzugsweise so durchgeführt, dass ein Konusabschnitt des Werkzeuges als erstes mit der zylindrischen Werkstückfläche in Kontakt kommt. Die zylindrische Werkstofffläche ist dabei von dem Spanwerkzeug vorzugsweise so hergestellt worden, dass gegenüber einem Sollmaß ein leichtes Untermaß eingerichtet ist, das mittels des Feinbearbeitungsprozesses auf das Sollmaß zu reduzieren ist. Mit der Anlage der konischen Fläche des Konusabschnittes an zunächst einer Umfangskante (Ringkante) der zylindrischen Werkstückfläche und durch die eingerichtete relative Vorschubgeschwindigkeit kann eine Feinbearbeitung erreicht werden, die ähnlich wie ein klassischer Honprozess eine Kreuzlinienstruktur erzeugen kann. Eine gleichmäßige Struktur dieser Art wird in der Regel jedoch erst dann erzeugt, wenn der Schaftabschnitt, der einen einheitlichen Durchmesser aufweist, entlang der zylindrischen Werkstückfläche geführt wird.

Im Stand der Technik wird bei Erreichen einer gewissen Relativkraft zwischen Werkzeug und Werkstück sofort ein Rückhub entgegen der Vorschubgeschwindigkeit eingeleitet, um ein "Festfressen" des Werkzeuges an dem Werkstück zu verhindern. Der Prozess war daher insgesamt relativ zeitaufwändig.

Durch die Maßnahme, die Prozessgröße durch Verändern der relativen Vorschubgeschwindigkeit stetig zu regeln, derart, dass die relative Vorschubgeschwindigkeit sich umso mehr ändert, je mehr ein Istwert der Prozessgröße von einem Sollwert der Prozessgröße abweicht, kann eine deutliche Erhöhung der Bearbeitungsgeschwindigkeit erreicht werden. Denn in vielen Fällen kann ein Bearbeitungsvorgang in einem Hub durchgeführt werden, also mit einer Vorwärtsbewegung und ggf. mit variierender Geschwindigkeit, ohne dass ein Rückhub eingeleitet werden muss.

Dieser Prozess kann dabei bis zu einer Halbierung der bislang üblichen Bearbeitungsgeschwindigkeit führen.

Ferner ergeben sich insbesondere auch für das Werkzeug deutlich weniger Belastungsspitzen. Immer dann, wenn der stetige Regler bemerkt, dass die Prozessgröße ansteigt, wird die relative Vorschubgeschwindigkeit beispielsweise etwas zurückgenommen, um auf diese Weise beispielsweise zu vermeiden, dass ein Schwellenwert erreicht wird, bei dem ein Rückhub dann zwangsläufig einzuleiten ist. Denn ein derartiger Schwellenwert kann auch bei dem vorliegenden Verfahren nach wie vor eingerichtet sein. Aufgrund der stetigen Regelung wird dieser Schwellenwert jedoch deutlich weniger häufig erreicht, so dass keine oder zumindest weniger Rückhubvorgänge erfolgen.

Wie erwähnt, kann mittels des Feinbearbeitungswerkzeuges auch ein Kreuzschliff an der zylindrischen Werkstücküberfläche erzielt werden. Richtungswechsel können zudem einen positiven Einfluss auf eine Gratbildung an Querbohrungen haben (im Gegensatz zu Langhub-Honverfahren, bei denen ein Werkzeug in einer Geschwindigkeit durchgängig durch eine Bohrung durchgeführt wird).

In einer bevorzugten Variante beinhaltet daher das Feinbearbeitungsverfahren wenigstens einen Rückhub, der ggf. aktiv von einer Steuereinrichtung also insbesondere dann einzuleiten ist, wenn dies aus übergeordneten Gründen vorteilhaft ist, ohne einen bestimmten Schwellenwert der Prozessgröße erreicht zu haben.

Ferner ergibt sich mit dem vorliegenden Verfahren keine Tendenz zum Blockieren des Werkzeuges aufgrund eines "Einschraub-Effektes".

Das Werkzeug weist vorzugsweise eine axiale Länge auf, die ein Mehrfaches größer ist als die entsprechende axiale Länge der zu bearbeitenden zylindrischen Werkstückfläche. Vorzugsweise liegt das Verhältnis von axialer Gesamtlänge des Werkzeuges zu der axialen Länge der zylindrischen Werkstückfläche in einem Bereich von 500:1 bis 2:1, insbesondere in einem Bereich von 300:1 bis 10:1.

Das Verhältnis von erster axialer Länge und zweiter axialer Länge (von Konusabschnitt bzw. Schaftabschnitt) liegt vorzugsweise in einem Bereich von 1:2 bis 10:1. Besonders bevorzugt liegt dieses Verhältnis in einem Bereich von 1:0,3 bis 1:0,8.

Die zylindrische Werkstückfläche ist, wie gesagt, vorzugsweise eine Bohrungsfläche, kann jedoch auch eine Außenumfangsfläche eines Zylinderabschnittes sein.

Die Relativrotation zwischen Werkzeug und Werkstückrohling kann vorzugsweise mit Drehzahlen von bis zu 10.000 Umdrehungen pro Minute eingerichtet werden. Vorzugsweise erfolgt das Erzeugen der Relativrotation durch Drehen des Werkstückrohlinges um die Bearbeitungsachse herum, beispielsweise mittels einer Werkzeugmaschine, insbesondere wenn das Verfahren auf einem Honmodul durchgeführt wird. Bei einer Honmaschine kann jedoch auch das Werkzeug selber relativ zu einem stehenden Werkstückrohling in Drehung versetzt werden.

Die relative Vorschubgeschwindigkeit zwischen dem Werkzeug und dem Werkstückrohling wird vorzugsweise durch Bewegen des Werkzeuges eingerichtet, kann jedoch auch durch Bewegen des Werkstückrohlings oder durch eine Kombination hiervon eingerichtet werden. Die Richtung entlang der Bearbeitungsachse ist vorzugsweise parallel zu dieser.

Die Prozessgröße, die eine Funktion einer Relativkraft zwischen dem Werkzeug und dem Werkstückrohling ist, kann beispielsweise eine Axialkraft sein, kann jedoch insbesondere ein Drehmoment dazwischen sein. Alternativ hierzu ist es möglich, dass die Prozessgröße ein elektrischer Motorstrom eines elektrischen Motors ist, der die relative Vorschubgeschwindigkeit erzeugt, und/oder eines Motors, der die Relativrotation erzeugt. Generell ist es auch möglich, hinsichtlich der Prozessgröße auf einen Druck abzustellen, wenn beispielsweise eine pneumatische Zylinder/Ventil-Lösung verwendet wird, um Relativbewegungen zwischen Werkzeug und Werkstück zu dämpfen, und/oder um das Werkzeug in Vorschubrichtung zu bewegen.

Dabei kann die Prozessgröße eine Vielzahl von Prozessgrößenwerten annehmen, es wird also nicht nur auf einen einzelnen Schwellenwert abgestellt. Eine Vielzahl von Prozessgrößenwerten soll insbesondere eine Anzahl von 3 oder 4 oder mehr unterschiedlichen Prozessgrößenwerten sein.

Die Prozessgröße kann am Werkzeug oder am Werkstück gemessen werden. Zur Ermittlung der Prozessgröße kann wenigstens ein Sensor vorgesehen sein. Der Sensor kann ein herkömmlicher Analogsensor sein, beispielsweise ein Wegsensor oder ein Kraftsensor. Ein Wegsensor kann insbesondere in Verbindung mit einer in Messrichtung beweglichen Komponente und Feder- und/oder Dämpfungseinrichtung vorgesehen sein (oder eines Elementes, das eine Kraft/Weg/Kennlinie darstellen kann). Es versteht sich jedoch, dass ein Signal eines derartigen "Analog"-Sensors in der Regel zur Verarbeitung in einer Steuervorrichtung in die digitale Domaine umgewandelt wird. Alternativ ist es auch möglich, Sensoren zu verwenden, die von vornherein digitale Daten bereitstellen, jedoch in jedem Fall eine Vielzahl von unterschiedlichen Prozessgrößenwerten erfassen können.

Unter einem stetigen Regeln wird daher vorliegend insbesondere ein Regelvorgang verstanden, der kein klassisches Zweipunkt- oder Dreipunkt-Verhalten aufweist. Vielmehr kann ein stetiges Regeln eine Vielzahl von unterschiedlichen Prozessgrößenwerten verarbeiten und/oder kann eine Vielzahl von unterschiedlichen Stellgrößen erzeugen.

Der stetige Regler kann insbesondere ein Proportionalregler (P-Regler) sein. Hierbei ist eine Stellgröße bzw. Reglerausgangsgröße (beispielsweise ein Ansteuerungswert für die relative Vorschubgeschwindigkeit) in der Regel proportional zu einer Regeldifferenz (also vorzugsweise einer Differenz zwischen einem Istwert der Prozessgröße und einem Sollwert der Prozessgröße).

Bei einem Proportionalregler ist generell zwar eine schnelle Reaktion auf Veränderungen der Ist-Größe möglich. Allerdings verbleibt bei einem Proportionalregler in der Regel eine gewisse Regelabweichung zwischen Sollwert und Istwert. Dies ist jedoch vorliegend nicht von großem Nachteil, da es nicht darauf ankommt, einen bestimmten Wert der Prozessgröße oder der relativen Vorschubgeschwindigkeit einzurichten, sondern flexibel und schnell auf Änderungen des Prozesses und auf Änderungen von Störgrößen zu reagieren.

Ggf. kann jedoch ein solcher Proportionalregler auch mit einem Integralregler und/oder mit einem Differentialregler kombiniert werden (beispielsweise zu einem sogenannten Pl-Regler oder zu einem PD-Regler oder zu einem PID-Regler).

Generell kann eine maximale Vorschubgeschwindigkeit eingestellt werden, die dann bedarfsweise verringert wird, wenn ein Bearbeitungsmoment ansteigt.

In anderen Fällen ist es jedoch auch denkbar, die stetige Reglung so einzurichten, dass dann, wenn beispielsweise der Istwert der Prozessgröße unter einen Sollwert der Prozessgröße abfällt, die Vorschubgeschwindigkeit erhöht wird. Vorzugsweise wird bei einer Verringerung der gemessenen Prozessgröße die Geschwindigkeit erhöht.

Vorzugsweise wird also erfindungsgemäß vorgesehen, dass die relative Vorschubgeschwindigkeit bzw. der relative Vorschub zwischen dem Werkzeug und dem Werkstück stetig, insbesondere proportional zu der Prozessgröße geregelt wird, bei der es sich insbesondere um ein Relativdrehmoment zwischen Werkzeug und Werkstück handeln kann.

In vielen Fällen kann der eigentliche Feinbearbeitungsprozess über einen längeren Zeitraum kontinuierlich und ohne Rückhub am Werkstück erfolgen. Aus übergeordneten Gründen, beispielsweise, um Späne zu entfernen, kann es jedoch auch sinnvoll sein, während des Feinbearbeitungsprozesses zwischendurch immer mal wieder einen Rückhub durchzuführen.

Parameter des Feinbearbeitungsprozesses lassen sich in Abhängigkeit von diversen Umgebungsparametern anpassen. Beispielsweise kann ein solcher Umgebungsparameter sein, ob das Feinbearbeitungswerkzeug neu ist oder bereits länger im Gebrauch ist. Hierdurch kann vermieden werden, dass ein neues, zu Anfang sehr "schnittiges" Werkzeug sich zu schnell in das Werkstück "hineinfrisst".

Der Regler ist vorzugsweise ein Proportionalregler, der auf Abweichungen der Ist-Prozessgröße von einer Soll-Prozessgröße abstellt. Ggf. kann auch auf ein Differential dieser Differenz abgestellt werden.

Der Sollwert der Prozessgröße kann ein konstanter Wert sein, kann jedoch auch über den Prozessverlauf ein veränderlicher Wert sein.

Vorzugsweise wird eine Differenz zwischen dem Sollwert der Prozessgröße und dem Istwert der Prozessgröße einem Regler eingegeben, der eine Stellgröße ausgibt, die einen Antriebsmotor zum Erzeugen der Vorschubgeschwindigkeit ansteuert.

Hierdurch kann die Stellgröße unmittelbar Einfluss auf die Vorschubgeschwindigkeit haben.

Die Prozessgröße kann, wie gesagt, eine Axialkraft sein, ein Drehmoment sein, kann jedoch auch ein Motorstrom sein oder ein Druck einer Pneumatikanordnung.

Von besonderem Vorzug ist es, wenn die Prozessgröße eine Funktion einer axialen Relativkraft zwischen dem Werkzeug und dem Werkstückrohling ist.

Ferner ist es bevorzugt, wenn die Prozessgröße eine Funktion eines relativen Drehmomentes zwischen dem Werkzeug und dem Werkstückrohling ist.

Gemäß einer weiteren bevorzugten Ausführungsform wird eine axiale Vorschubbewegung unterbrochen, wenn eine axiale Relativkraft zwischen dem Werkzeug und dem Werkstückrohling einen Axialkraft-Schwellenwert überschreitet und/oder wenn ein relatives Drehmoment zwischen dem Werkzeug und dem Werkstückrohling einen Drehmoment-Schwellenwert überschreitet.

Dabei ist es von besonderem Vorzug, wenn nach dem Unterbrechen der Vorschubbewegung ein der Vorschubgeschwindigkeit entgegen gerichteter Rückhub durchgeführt wird.

Hierbei wird davon ausgegangen, dass der Bearbeitungsprozess nach dem Rückhub wieder erneut eingeleitet wird, also beispielsweise quasi von vorn begonnen wird.

Gemäß einer weiteren bevorzugten Ausführungsform wird eine zur Bearbeitung des Werkstückrohlings benötigte Arbeit erfasst. Hierbei kann beispielsweise über der Zeit ein Produkt von Weg und Drehmoment (oder Kraft) erfasst und verarbeitet, beispielsweise aufintegriert werden, um die Gesamtarbeit zu erfassen.

Die zur Bearbeitung des Werkstückrohlings benötigte Arbeit kann beispielsweise dazu verwendet werden, um festzustellen, ob ein Werkzeug noch hinreichend scharf ist oder ggf. ausgetauscht werden muss.

Gemäß einer weiteren insgesamt bevorzugten Ausführungsform wird der Vorschubgeschwindigkeit zumindest abschnittsweise eine relative Oszillationsbewegung überlagert, die vorzugsweise eine Frequenz in einem Bereich von 10 Hz bis 150 Hz, vorzugsweise 40 Hz bis 100 Hz, insbesondere 40 Hz bis 70 Hz, aufweist und/oder eine Amplitude in einem Bereich von 0,5 mm bis 4 mm aufweist.

Hierdurch kann die Bearbeitungsgeschwindigkeit in vielen Fällen noch einmal deutlich erhöht werden.

Ferner ist es insgesamt bevorzugt, wenn vor dem Erzeugen der relativen Vorschubgeschwindigkeit ein Einfahr- bzw. Startprozess durchgeführt wird, bei dem erfasst wird, ob eine Bearbeitung des Werkstückrohlings mit dem Werkzeug möglich ist.

Hierbei kann beispielsweise abgefragt werden, ob der Werkstückrohling überhaupt eine Bohrung bzw. eine zylindrische zu bearbeitende Werkstückfläche aufweist. Ferner kann ggf. abgefragt werden, ob eine Bohrung zu klein oder zu groß ist.

Ferner ist es vorteilhaft, wenn das Werkzeug einen Konusabschnitt aufweist, wobei vor dem Erzeugen der relativen Vorschubgeschwindigkeit der Werkstückrohling und das Werkzeug relativ zueinander bewegt werden, bis der Konusabschnitt eine Ringkante des Werkstückrohlings berührt, wobei die hierbei eingerichtete axiale Relativposition zwischen dem Werkzeug und dem Werkstückrohling erfasst wird.

Diese Erfassung kann ein Indiz dafür sein, wie groß die Bohrung ist, die in das Werkstück zur Erzeugung der zylindrischen Werkstückfläche eingebracht worden ist. Ggf. kann diese axiale Relativposition dazu verwendet werden, um die Bearbeitung mittels eines Spanwerkzeuges von nachfolgenden Werkstücken zu beeinflussen, also beispielsweise die folgenden Bohrungen etwas größer oder etwas kleiner zu machen.

Ferner ist es vorteilhaft, wenn das Werkzeug einen Konusabschnitt aufweist, wobei der Werkstückrohling und das Werkzeug relativ zueinander in eine Einfahrposition bewegt werden, bis zumindest ein Teil des Konusabschnittes sich axial mit der zylindrischen Werkstückfläche überschneidet, eine Ringkante der zylindrischen Werkstückfläche jedoch von dem Werkzeug nicht berührt wird.

Hierdurch kann eine Ausgangsposition für den Feinbearbeitungsprozess schnell eingerichtet werden. Ferner kann durch Überprüfen, ob eine axiale Überschneidung von Konusabschnitt und zylindrischer Werkstückfläche möglich ist, überprüft werden, ob die zylindrische Werkstückfläche überhaupt vorhanden ist, ob beispielsweise in dem Werkstück eine Bohrung vorhanden ist.

Dabei ist es von besonderem Vorzug, wenn nach dem Erreichen der Einfahrposition die relative Vorschubgeschwindigkeit erzeugt und die Prozessgröße durch Verändern der relativen Vorschubgeschwindigkeit geregelt wird.

Dabei ist das Ziel, das Werkzeug möglichst schnell in Kontakt mit der zylindrischen Werkstückfläche zu bringen und diese zu bearbeiten, ohne einen Maximalwert der Prozessgröße (z.B. ein maximales Drehmoment) zu überschreiten. Der eigentliche geregelte Feinbearbeitungsprozess wird bei dieser Ausführungsform also gestartet, bevor das Werkzeug mit dem Konusabschnitt die Ringkante der zylindrischen Werkstückfläche kontaktiert. Dieser erste Kontakt kann aufgrund eines flachen Konuswinkels relativ diffus sein. Dies kann aber auch einen Vorteil haben, da die Prozessgröße dann in der Regel nicht so steil ansteigt und aufgrund der Regelung hinreichend Zeit vorhanden ist, die relative Vorschubgeschwindigkeit zu reduzieren. Für das Überwinden der Strecke von der Einfahrposition bis zu einer Kontaktposition eignet sich der stetige Regelungsprozess ganz besonders, da hierbei potenziell viel Zeit eingespart werden kann und somit eine möglichst hohe Einfahr-Geschwindigkeit angestrebt und erreicht werden kann.

Es versteht sich, dass die vorstehend genannten und die nachstehend noch zu erläuternden Merkmale nicht nur in der jeweils angegebenen Kombination, sondern auch in anderen Kombinationen oder in Alleinstellung verwendbar sind, ohne den Rahmen der vorliegenden Erfindung zu verlassen. Es zeigen:
- Fig. 1: eine schematische Darstellung einer Werkzeugmaschinenanordnung zur Durchführung eines Feinbearbeitungsverfahrens;
- Fig. 2: eine schematische Darstellung eines Feinbearbeitungsmoduls zur Durchführung eines Feinbearbeitungsverfahrens;
- Fig. 3: eine Darstellung des Feinbearbeitungsmoduls der Fig. 2, montiert an einer Werkzeugmontagestelle einer Werkzeugmaschine, insbesondere eines Bearbeitungszentrums;
- Fig. 4: eine alternative Ausführungsform einer erfindungsgemäßen Vorrichtung zur Feinbearbeitung von zylindrischen Werkstückflächen;
- Fig. 5: eine Darstellung eines Regelkreises zur Verwendung in einer Steuervorrichtung einer erfindungsgemäßen Feinbearbeitungsvorrichtung;
- Fig. 6: eine beispielhafte Regelcharakteristik des Regelkreises der Fig. 5;
- Fig. 7: ein Zeitablaufdiagramm von verschiedenen Zustandsgrößen eines beispielhaften Feinbearbeitungsprozesses zur Bearbeitung einer zylindrischen Werkstückfläche eines Werkstückes;
- Fig. 8: eine schematische Längsschnittansicht durch ein Feinbearbeitungsmodul zur Durchführung eines Feinbearbeitungsverfahrens;
- Fig. 9: eine Schnittansicht entlang der Linie IX-IX der Fig. 8;
- Fig. 10: eine perspektivische Detailansicht eines Schlittens des Feinbearbeitungsmoduls der Fig. 8; und
- Fig. 11: ein Flussdiagramm eines Verfahrens zur Feinbearbeitung einer zylindrischen Werkstückfläche.

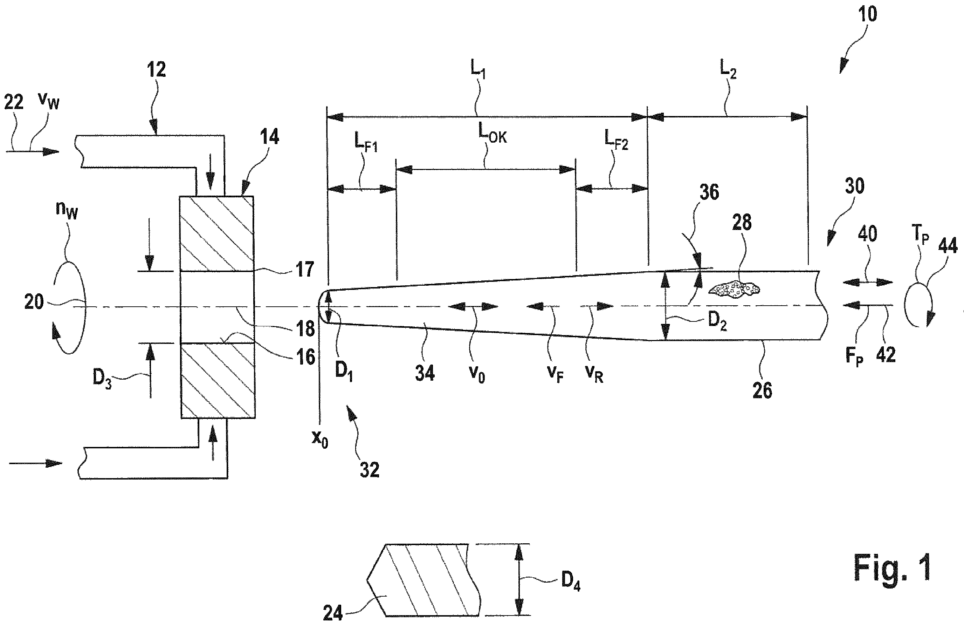

In Fig. 1 ist in schematischer Form eine Werkzeugmaschinenanordnung zur Bearbeitung von Werkstücken dargestellt und generell mit 10 bezeichnet.

Die Werkzeugmaschinenanordnung 10 beinhaltet eine Spanneinrichtung 12, mithilfe derer ein Werkstück 14 eingespannt werden kann. Das Werkstück 14, das vorliegend auch als Werkstückrohling bezeichnet wird, beinhaltet eine zylindrische Werkstückfläche 16, vorliegend in Form einer Bohrung. Die zylindrische Werkstückfläche 16 definiert an einer Stirnseite des Werkstückes 14 eine Ringkante 17.

Die Spanneinrichtung 12 ist dazu ausgebildet, das Werkstück 14 um eine Längsachse 18 in Drehung zu versetzen, und zwar mittels eines schematisch angedeuteten Rotationsantriebs 20, der das Werkstück 14 mit einer Drehzahl n_{W} in Drehung versetzen kann.

Der Spanneinrichtung 12 kann ferner ein Werkstück-Axialantrieb 22 zugeordnet sein, mittels dessen das Werkstück 14 mit einer Vorschubgeschwindigkeit v_{W} parallel zur Längsachse 18 angetrieben werden kann. In manchen Fällen kann die Spanneinrichtung 12 auch so ausgebildet sein, dass das Werkstück 14 in einer Richtung quer zu der Längsachse 18 versetzbar ist, um das Werkstück 14 unterschiedlichen Werkzeugen zuordnen zu können, die an der Werkzeugmaschinenanordnung 10 montiert sind.

Vorliegend beinhaltet die Werkzeugmaschinenanordnung 10 beispielsweise ein Spanwerkzeug 24, das eine definierte geometrische Schneide besitzt und beispielsweise als Bohrer, als Drehwerkzeug oder Ähnliches ausgebildet sein kann. Vorliegend ist das Spanwerkzeug 24 dazu ausgebildet, an einem Werkstückrohling 14 die Bohrung vorzusehen, die die zylindrische Werkstückfläche 16 bildet.

Die Werkzeugmaschinenanordnung 10 beinhaltet vorliegend ferner ein Feinbearbeitungswerkzeug 26, das beispielsweise als Honwerkzeug ausgebildet sein kann. Das Feinbearbeitungswerkzeug 26 ist einteilig ausgebildet, und zwar im Wesentlichen dornförmig mit einer am Außenumfang ausgebildeten Werkzeugbeschichtung 28, die beispielsweise diamantbasiert, CBN-basiert oder Ähnliches sein kann.

Das Feinbearbeitungswerkzeug 26 weist in Längsrichtung gesehen ein erstes Werkzeugende 30 auf, im Bereich dessen das Feinbearbeitungswerkzeug 26 eingespannt werden kann. Ferner weist das Feinbearbeitungswerkzeug 26 ein gegenüberliegendes axiales zweites Werkzeugende 32 auf. Das Feinbearbeitungswerkzeug 26 erstreckt sich von der Einspannung im Bereich des ersten Werkzeugende 30 entlang einer Längsachse, die vorliegend mit der Längsachse 18 des Werkzeuges 14 zusammenfällt.

In diesem vorstehenden Bereich weist das Feinbearbeitungswerkzeug 26 einen Konusabschnitt 34 auf, der sich ausgehend von dem zweiten Werkzeugende 32 konisch erweitert, und zwar unter einem Konuswinkel 36, der beispielsweise in einem Bereich von 0,003° bis 0,05 liegen kann. Im Bereich des zweiten Werkzeugendes 32 weist der Konusabschnitt 34 einen ersten Durchmesser D₁ auf, der größer ist als 0.

Der von der Einspannung vorstehende Abschnitt des Feinbearbeitungswerkzeuges 26 weist ferner einen Schaftabschnitt 38 auf, der an dem Konusabschnitt 34 anschließt und der einen einheitlichen zweiten Durchmesser D₂ besitzt. Eine Differenz zwischen dem Durchmesser D₂ und dem Durchmesser D₁ liegt vorzugsweise in einem Bereich von 0,5 mm bis 0,005 mm. Das Verhältnis von D₂ zu D₁ liegt vorzugsweise in einem Bereich von 10:1 bis 2:1.

Das Feinbearbeitungswerkzeug 26 ist mittels eines Linearantriebs 40 in axialer Richtung bewegbar. Ein schematisch angedeuteter Axialkraftsensor 42 ist dazu ausgebildet, eine Axialkraft F_{P} zu messen, die eine Relativkraft zwischen dem Werkzeug 26 und dem Werkstück 14 darstellt. Ferner ist ein Drehmomentsensor 44 vorgesehen, mittels dessen ein relatives Drehmoment T_{P} zwischen dem Werkzeug 26 und dem Werkstück 14 messbar ist.

Der Konusabschnitt 34 weist eine erste axiale Länge L₁ auf. Der Schaftabschnitt 38 weist eine zweite Länge L₂ auf. Das Verhältnis von L₁ zu L₂ liegt vorzugsweise in einem Bereich von 10:1 bis 1:2, insbesondere von 3:1 bis 1:1, vorzugsweise in einem Bereich von 2,5:1 bis 1,25:1.

Das Spanwerkzeug 24 weist einen Durchmesser D₄ auf, um an dem Werkstück 14 eine Bohrung mit einem Durchmesser D₃ zu erzeugen. Der Wert von D₃, der auch als Rohdurchmesser bezeichnet werden kann, ist vorzugsweise kleiner als der Wert von D₂.

Wenn das Feinbearbeitungswerkzeug 26 erstmalig in die Bohrung eingeführt wird, kommt die Ringkante 17 in Anlage an den Konusabschnitt 34. Die axiale Länge L₁ des Konusabschnitts 34 ist gemäß Fig. 1 aufgeteilt in drei axiale Längen L_{F1}, L_{OK}, L_{F2}. L_{F1} grenzt an an das zweite Werkzeugende 32. L_{F2} grenzt an den Schaftabschnitt 38. Der Abschnitt L_{OK} liegt zwischen den Abschnitten L_{F1} und L_{F2}.

Wenn bei dem erstmaligen Kontakt die Ringkante 17 in dem Bereich L_{OK} in Anlage an den Konusabschnitt 34 gelangt, ist die Bohrung mit einem richtigen Durchmesser D₃ hergestellt worden. Wenn die Ringkante 17 innerhalb des Bereiches L_{F1} in Anlage an den Konusabschnitt 34 gelangt, ist der Durchmesser D₃ zu klein, so dass das Werkstück 14 nicht in Ordnung ist und nicht bearbeitet werden kann. Wenn die Ringkante 17 im Bereich des Abschnittes L_{F2} in Anlage an den Konusabschnitt 34 gelangt, ist der Durchmesser D₃ zu groß, und das Werkstück 14 wird vorzugsweise als Ausschuss ausgesondert.

Bei Werkstücken 14, die nach der obigen Definition in Ordnung sind, kann gemessen werden, an welcher Stelle des Bereiches L_{OK} die Ringkante 17 in Anlage an den Konusabschnitt 34 gelangt.

Dieser Wert kann zu mehreren Zwecken ausgewertet werden. Zum einen kann ggf. eine Meldung erfolgen, dass nachfolgende Werkstücke mit einer etwas größeren oder einer etwas kleineren Bohrung bereitgestellt werden, um im Idealfall in der Mitte des Bereiches L_{OK} einen Erstkontakt zu erlangen. Ferner kann diese Information dahingehend ausgewertet werden, dass das Feinbearbeitungswerkzeug 26 möglicherweise hinsichtlich seiner Werkzeugbeschichtung 28 eine gewisse Abnutzung erfahren hat, so dass diese Information auch zur Überwachung der Werkzeugqualität des Feinbearbeitungswerkzeuges 26 verwendet werden kann.

Mittels des Linearantriebs 40 kann das Feinbearbeitungswerkzeug 26 in einer Vorschubrichtung v_{F} bewegt werden, also in Richtung auf das Werkstück 14 zu. Mittels des Linearantriebs 40 kann das Feinbearbeitungswerkzeug 26 auch in der entgegengesetzten Richtung bewegt werden, wie es in Fig. 1 durch einen Rückhub v_{R} angedeutet ist.

Ein Verfahren zur Feinbearbeitung der zylindrischen Werkstückfläche 16 des Werkstückes 14 bzw. Werkstückrohlings 14 mittels des Feinbearbeitungswerkzeuges 26 beinhaltet vorzugsweise die folgenden Schritte: zum einen wird eine Relativrotation zwischen dem Werkzeug 26 und dem Werkstückrohling 14 um die Bearbeitungsachse 18 herum erzeugt, und zwar beispielsweise mittels des Rotationsantriebes 20 der Spanneinrichtung 12 oder mittels eines Rotationsantriebes für das Werkzeug. Ferner wird eine relative Vorschubgeschwindigkeit v_{F} zwischen dem Werkzeug 26 und dem Werkstückrohling 14 entlang der Längs- bzw. Bearbeitungsachse 18 erzeugt. Dies erfolgt vorzugsweise mittels des Linearantriebs 40, kann jedoch auch durch den Axialantrieb 22 erfolgen oder durch eine Kombination hiervon.

Ferner wird ein Istwert einer Prozessgröße erfasst, die eine Funktion einer Relativkraft zwischen dem Werkzeug 26 und dem Werkstückrohling 14 ist und die eine Vielzahl von Prozessgrößenwerten annehmen kann. Die Prozessgröße kann beispielsweise das relative Drehmoment T_{P} sein, kann jedoch auch die axiale Relativkraft F_{P} sein. Ferner kann die Prozessgröße beispielsweise ein elektrischer Motorstrom eines elektrischen Antriebsmotors des Linearantriebs 40 sein, oder ein pneumatischer Druck, sofern der Linearantrieb 40 beispielsweise über eine Pneumatikanordnung auf das Feinbearbeitungswerkzeug 26 wirkt.

Bei der Feinbearbeitung erfolgt dann ein Erstkontakt zwischen dem Konusabschnitt 34 und der Ringkante 17. Anschließend wird weiterhin die relative Vorschubgeschwindigkeit eingestellt und die zylindrische Werkstückfläche 16 wird dadurch feinbearbeitet. Dabei wird die Prozessgröße T_{P}; F_{P} stetig geregelt, und zwar durch Verändern der relativen Vorschubgeschwindigkeit v_{F}, derart, dass die relative Vorschubgeschwindigkeit sich um so mehr ändert, je mehr ein Istwert der Prozessgröße T_{P}; F_{P} von einem Sollwert dieser Prozessgröße abweicht.

Mit anderen Worten erfolgt der Vorschub in Abhängigkeit von der Erfassung der Prozessgröße, wobei das stetige Regeln dieser Prozessgröße vorzugsweise durch einen Proportionalregler erfolgt.

In dem Prozess gelangt irgendwann der Schaftabschnitt 38 in die Bohrung des Werkstückes 14. Hierbei wird der obige Prozess fortgeführt. Anschließend kann ein Rückhub erfolgen. Auch während des Prozesses kann ggf. ein einzelner Rückhub oder es können mehrere Rückhube bedarfsweise durchgeführt werden, insbesondere dann, wenn die axiale Länge der zylindrischen Werkstückfläche 16 lang ist, um auf diese Weise Späne auszuräumen.

Der Vorschubbewegung v_{F} kann in manchen Prozessvarianten eine Oszillationsbewegung überlagert werden, die in Fig. 1 schematisch bei vo angedeutet ist. Die Oszillationsbewegung kann eine Frequenz in einem Bereich von 30 Hz bis 100 Hz aufweisen und/oder eine Amplitude in einem Bereich von 0,5 mm bis 4 mm. Das Durchführen eines Feinbearbeitungsprozesses, insbesondere eines Honprozesses, kann unter Verwendung eines Feinbearbeitungswerkzeuges erfolgen, wie es oben und nachstehend beschrieben ist. Die relative Bewegung zwischen dem Werkzeug und dem Werkstück kann dabei hinsichtlich der Vorschubgeschwindigkeit geregelt sein, wie oben ausgeführt. In anderen Ausführungsformen kann jedoch der Vorschub auch ungeregelt erfolgen. In diesem Fall kann die zusätzliche Oszillation, insbesondere in den oben genannten Arbeitsbereichen, vorteilhaft sein, beispielsweise auch unter Verwendung eines Werkzeuges, wie es beim Dornhonen verwendet wird. Eine zusätzliche Oszillationsbewegung wird aufgrund der Massenträgheit des Werkzeuges und der Werkzeug-Spindel sowie eines Auslenkschlittens vorteilhaft mittels des Werkstückes realisiert. Die relativ kleine bewegte Masse ermöglicht dabei die oben genannten Oszillationsfrequenzen, ohne dass die Maschine zu große Schwingungen in die Umgebung abgibt. Eine axiale Auslenkung muss während der Bearbeitung mit der Oszillation versteift werden. Beispielsweise kann eine axiale Vorspannkraft erhöht werden.

Es versteht sich, dass der Prozess vorzugsweise unter Hinzugabe einer geeigneten Schmierflüssigkeit durchgeführt werden kann, beispielsweise ein Honöl oder dergleichen.

Nachfolgend werden weitere Ausführungsformen von Werkzeugmaschinen bzw. von Feinbearbeitungsmodulen für Werkzeugmaschinen beschrieben, die sämtlich auf dem oben beschriebenen Verfahren beruhen. Generell ist der Aufbau und die Konstruktion sowie die Funktion der nachstehend beschriebenen Werkzeugmaschinen bzw. Feinbearbeitungsmodule daher als identisch anzusehen zu den oben beschriebenen Merkmalen. Gleiche Elemente sind daher mit gleichen Bezugszeichen gekennzeichnet. Im Folgenden werden im Wesentlichen die Unterschiede erläutert.

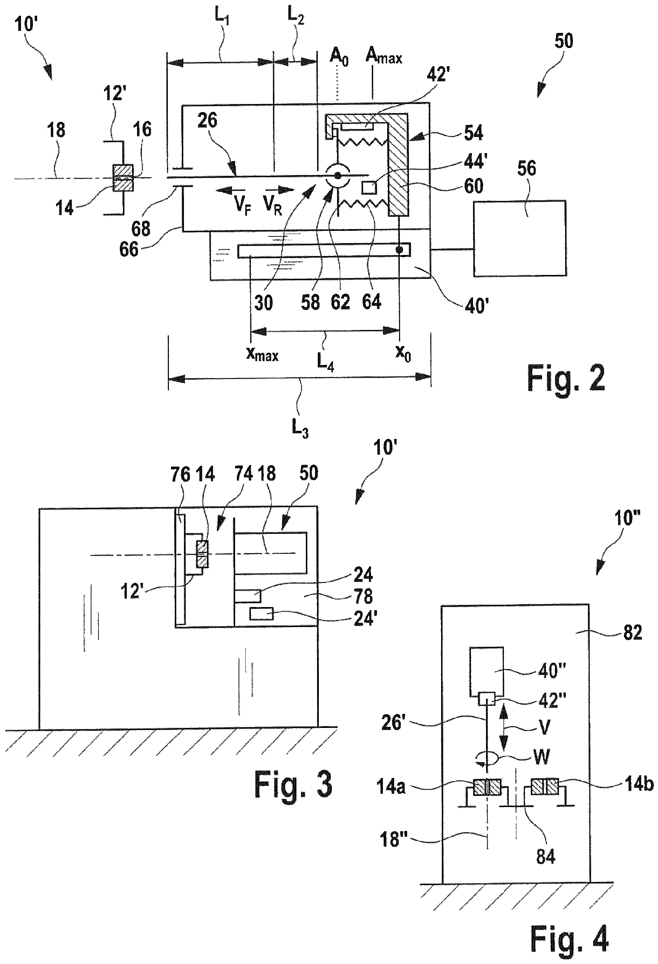

In Fig. 2 ist ein Feinbearbeitungsmodul 50 für eine Werkzeugmaschinenanordnung 10' schematisch dargestellt.

Das Feinbearbeitungsmodul 50 beinhaltet ein Modulgehäuse 52, das eine axiale Länge L₃ aufweist, Innerhalb des Modulgehäuses 52 ist ein Schlitten 54 in axialer Richtung zwischen einer Position x₀ und einer Position x_{MAX} bewegbar, und zwar mittels eines Linearantriebs 40', der in Fig. 2 schematisch angedeutet ist.

Wie auch bei den vorherigen Ausführungsformen kann der Linearantrieb 40' realisiert sein durch einen Elektromotor in Verbindung mit einem Rotations/Translations-Wandler, durch einen elektrischen Linearmotor oder dergleichen.

Ferner beinhaltet das Feinbearbeitungsmodul 50 eine Steuereinrichtung 56, die an dem Modulgehäuse 52 anschließbar ist und beispielsweise als Steuerterminal zur Anordnung neben der Werkzeugmaschinenanordnung 10' ausgebildet sein kann.

Das Feinbearbeitungswerkzeug 26 ist im Bereich seines ersten Werkzeugendes 30 an dem Schlitten 54 gelagert, und zwar mittels einer Kardanlagerung 58.

Der Schlitten 54 beinhaltet eine Schlittenbasis 60, die mit einem Antriebsglied des Linearantriebs 40' gekoppelt ist, sowie einen Schieber 62. Der Schieber 62 ist mit der Schlittenbasis 60 über eine Axialfederanordnung 64 gekoppelt. Das erste Werkzeugende 30 des Feinbearbeitungswerkzeuges 26 ist an dem Schieber 62 gelagert. Der Axialkraftsensor 42' ist dazu ausgebildet, eine Relativverschiebung zwischen der Schlittenbasis 60 und dem Schieber 62 zu erfassen. Ferner ist ein Drehmomentsensor 44' vorgesehen, der eine Relativverdrehung zwischen dem Feinbearbeitungswerkzeug 26 (oder einer starr damit verbundenen Spanneinrichtung) und dem Schlitten 54 bzw. dem Modulgehäuse 52 erfassen kann.

In Fig. 2 ist angedeutet, dass sich die Relativposition zwischen der Schlittenbasis 60 und dem Schieber 62 in einem Bereich zwischen A₀ und A_{MAX} bewegen kann.

Das Modulgehäuse 52 weist eine Gehäusewand 66 auf, an der eine Werkzeugführung 68 ausgebildet ist. Die Werkzeugführung 68 ist dazu ausgebildet, das zweite Werkzeugende 32 des Feinbearbeitungswerkzeuges 26 zu führen, insbesondere konzentrisch zu der Bearbeitungsachse 18. In die Werkzeugführung 68 kann eine Zuführung für Prozessfluid integriert sein.

In der Nullposition xo des Schlittens 54 befindet sich dieser im Bereich von einem axialen Ende des Modulgehäuses 52, und zwar von jenem axialen Ende, das der Gehäusewand 66 axial gegenüberliegt. Das Feinbearbeitungswerkzeug 26 erstreckt sich in dieser Position im Wesentlichen innerhalb des Modulgehäuses, wobei das zweite axiale Werkzeugende 32 sich bis hin zu der Werkzeugführung 68 erstreckt.

Der maximale Hub zwischen der Position x₀ und der maximalen Auslenkung x_{MAX} des Schlittens 54 ist in Fig. 2 bei L₄ angedeutet. Dieser Hub L₄ ist so groß, dass das Feinbearbeitungswerkzeug 26 sich sowohl mit dem Konusabschnitt 34 als auch mit dem Schaftabschnitt 38 (mit den Längen L₁ und L₂) aus dem Modulgehäuse 52 heraus erstrecken kann, um eine Bearbeitung an einem Werkstück 14 vorzunehmen, das außerhalb des Modulgehäuses 52 angeordnet ist, und zwar vorzugsweise eingespannt mittels einer Spanneinrichtung 12' der Werkzeugmaschinenanordnung 10'.

Der Linearantrieb 40 ist in axialer Überlappung mit dem Modulgehäuse 52 bzw. in axialer Überlappung mit dem Feinbearbeitungswerkzeug 26 angeordnet. Der Linearantrieb 40 kann in das Modulgehäuse 52 integriert sein. Ein Verhältnis zwischen der axialen Modullänge L₃ und dem maximalen Fahrweg (Hub) L₄ des Schlittens 54 liegt vorzugweise in einem Bereich von 1,3:1 bis 2,5:1, vorzugsweise in einem Bereich von 1,4:1 bis 2,2:1.

Das Feinbearbeitungsmodul 50 kann folglich in axialer Richtung kompakt realisiert sein.

In Fig. 3 ist eine beispielhafte Werkzeugmaschinenanordnung 10' gezeigt, die eine Spanneinrichtung 12' beinhaltet, die um eine Bearbeitungsachse bzw. Längsachse herum drehbar ist und dazu ausgerichtet ist, ein Werkstück 14 einzuspannen.

Die Werkzeugmaschine kann insbesondere als Drehmaschine ausgebildet sein und weist einen Bearbeitungsraum 74 auf, der mittels einer Tür 76 verschließbar ist, wie es in Fig. 3 durch einen Pfeil angedeutet ist.

Innerhalb des Bearbeitungsraumes 74 ist eine Werkzeugmontagestelle 78 ausgebildet, an der beispielsweise unterschiedliche Spanwerkzeuge 24, 24' festgelegt sein können. Ferner kann an der Werkzeugmontagestelle 78 das Feinbearbeitungsmodul 50 der Fig. 2 festgelegt sein. In Fig. 3 ist dargestellt, dass die Längsachse 18 des Feinbearbeitungsmoduls 50 mit der Bearbeitungsachse 18 der Werkzeugmaschinenanordnung ausgerichtet ist. Folglich kann in dieser Relativposition eine Feinbearbeitung des eingespannten Werkstückes 14 erfolgen.

Die Spanneinrichtung 12' kann in manchen Ausführungsformen auch quer zu der Achse 18 versetzt werden, um an dem Werkstück 14 Bearbeitungen mittels anderer spanender Werkzeuge 24, 24' durchführen zu können.

In Fig. 2 ist ferner angedeutet, dass die Steuereinrichtung 56 des Feinbearbeitungsmoduls 50 außerhalb eines nicht näher bezeichneten Gehäuses der Werkzeugmaschinenanordnung 10' angeordnet sein kann und über einen nicht näher dargestellten Kabelstrang mit dem Feinbearbeitungsmodul 50 verbunden sein kann.

Das Modul 50 ist dabei als Austauschmodul bzw. als Zusatzmodul für die Werkzeugmaschinenanordnung 10' ausgebildet und kann unabhängig von der Werkzeugmaschinenanordnung 10' betrieben werden. Zur Initiierung eines Feinbearbeitungsprozesses mittels des Feinbearbeitungsmoduls 50 wird ein Werkstück 14 mit einer zylindrischen Bohrung in der Spanneinrichtung 12' eingespannt und in Ausrichtung mit der Achse des Feinbearbeitungsmoduls 50 gebracht, wie es in Fig. 3 dargestellt ist. Anschließend wird vor der Initiierung des Feinbearbeitungsprozesses das Werkstück 14 mittels eines nicht näher dargestellten Rotationsantriebes 20 in Drehung versetzt. Die Drehzahl kann in einem Bereich zwischen 500 Umdrehungen/Minute bis 10000 Umdrehungen/ Minute liegen, und vorzugsweise in einem Bereich höher als 5000 Umdrehungen/Minute.

Die Drehzahl n_{W} des Werkstückes 14 wird vorzugsweise auf eine konstante Drehzahl geregelt. Sobald die Drehzahl eingerichtet ist, kann der Feinbearbeitungsprozess starten, wobei der Schlitten 54 mit einer relativen Vorschubgeschwindigkeit in Richtung hin zu dem Werkstück 14 bewegt wird, derart, dass der Konusabschnitt durch die Werkzeugführung 68 hindurch in die Bohrung des Werkstückes 14 eingeführt wird, bis die Ringkante 17 (siehe Fig. 1) in Anlage an den Konusabschnitt 34 gelangt.

Hierbei wird die relative Vorschubgeschwindigkeit v_{F} auf einen bevorzugten Wert eingestellt. Ferner wird ein Istwert einer Prozessgröße T_{P} oder F_{P} erfasst. Für die Prozessgröße wird ein bestimmter Sollwert vorgegeben. Die Prozessgröße wird anschließend stetig, insbesondere proportional geregelt, und zwar durch Verändern der relativen Vorschubgeschwindigkeit v_{F}, derart, dass die relative Vorschubgeschwindigkeit v_{F} sich um so mehr ändert, je mehr ein Istwert der Prozessgröße von einem Sollwert der Prozessgröße abweicht.

Dabei wird vorzugsweise eine Differenz zwischen dem Sollwert der Prozessgröße und dem Istwert der Prozessgröße in einen Regler eingegeben, wie einen P-Regler, einen Pl-Regler oder einen PID-Regler, wobei dieser Regler eine Stellgröße ausgibt, die einen Antriebsmotor des Linearantriebs 40' zum Erzeugen der Vorschubgeschwindigkeit v_{F} ansteuert.

Hierdurch dringt das Feinbearbeitungswerkzeug 26 immer tiefer in die Bohrung ein, bis es mit dem zweiten Ende 32 aus der Stirnseite austritt, die der Ringkante 17 gegenüberliegt. Über den Schaftabschnitt 38 kann der Bohrungsdurchmesser dabei auf ein gewünschtes Sollmaß gefertigt werden.

Formfehler einer mittels eines Spanwerkzeuges 24 hergestellten Bohrung, beispielsweise Unrundheiten, Vorweiten, Welligkeiten, Konizitäten oder Bananenformen, können durch diesen Feinbearbeitungsprozess verringert oder vollständig eliminiert werden. Es können Maßhaltigkeiten von wenigen Mikrometern erreicht werden.

Der Prozess ist stabil und kraftkontrolliert, mit minimaler Streuung von Form, Oberfläche und Maß. Das System kann zudem relativ einfach realisiert werden, da weder die Form noch das Durchmesser-Maß durch Messen oder Regeln eingestellt oder erhalten werden müssen. Das Endmaß der Bohrung ergibt sich vielmehr durch den Durchmesser D₂ des Schaftabschnittes 38.

Durch die Kardanlagerung 58 kann das Feinbearbeitungswerkzeug 26 sich dabei zwischen der Einspannung und der Werkzeugführung 68 leicht aufbiegen, so dass sich in axialer Richtung eine gewisse Elastizität ergibt. Die Kardanlagerung 58 hat insbesondere die folgenden Aufgaben: zum einen ein Ausgleich der Lage und von Winkelfehlern zwischen Werkzeugmaschine und Feinbearbeitungsmodul. Zum anderen der Ausgleich von Toleranzen der Bewegung des Feinbearbeitungsmoduls, ferner der Ausgleich der Lage und von Winkelfehlern von Toleranzen der eigenen Geradheit des Feinbearbeitungswerkzeuges 26 und von Krümmungen des Feinbearbeitungswerkzeuges 26 aufgrund einer axialen Last.

Ferner kann dem Schlitten 54 ein Axial-Anschlagsensor zugeordnet sein, der beispielsweise erfasst, wenn das Feinbearbeitungswerkzeug 26 sich trotz seiner vorgegebenen Vorschubgeschwindigkeit v_{F} axial nicht mehr bewegt. Dieser Axial-Anschlagsensor kann beispielsweise einer Auslenkung des Schiebers 62 in Bezug auf die Schlittenbasis 60 entsprechen. Der Axial-Anschlagsensor kann typischerweise auf einer indirekten oder einer direkten analogen Kraftmessung basieren. Beispielsweise kann der Axial-Anschlagsensor dabei über eine Feder oder einen Druckluftkolben vorgespannt sein, so dass der Axial-Anschlagsensor typischerweise vor Erreichen der maximalen Auslenkung schaltet, und zwar nahe bei Ao, so dass der Rest des Weges bis A_{MAX} als "Knautschzone" dienen kann, bis der Vorschub gestoppt hat. Der Axial-Anschlagsensor kann insbesondere so eingestellt werden, dass er bei einer Auslenkung aus A₀ sofort schaltet. Über die Steuerung kann dann noch ein gewünschtes "Delta" parametrisiert werden, wann der Vorschub effektiv umgedreht werden soll, also ein Rückhub einsetzt. Auf diese Weise kann ein durchaus erwünschtes "Aufsitzen" des Werkzeuges am Werkstück eingestellt werden. Je schneller die Vorschubgeschwindigkeit ist, desto näher an A₀ muss der Rückhub eingeleitet werden, so dass A_{MAX} aufgrund der Reaktionszeit nicht überschritten wird.

In einer bevorzugten Ausführungsform arbeitet der Drehmomentsensor 44' als quasianaloger Sensor, der eine Vielzahl von Drehmomentwerten erfassen kann. Der Axialkraftsensor 42' kann hingegen als der oben beschriebene Axial-Anschlagsensor ausgebildet sein. In anderen Ausführungsformen kann als Prozessgröße nicht das Drehmoment T_{P} herangezogen werden, sondern alternativ eine Axialkraft F_{P}. Ferner kann die Prozessgrö-ße durch eine Kombination dieser Größen gebildet sein.

Sobald der Feinbearbeitungsprozess beendet ist, kann die Steuervorrichtung 56 ein Fertig-Signal an die Steuerung der Werkzeugmaschine übergeben, die dann die Rotation der Spanneinrichtung 12' beenden kann, um das auf diese Weise fertiggestellte und feinbearbeitete Werkstück 14 entnehmen zu können.

In Fig. 4 ist eine alternative Ausführungsform einer Werkzeugmaschinenanordnung 10" gezeigt, bei der die Werkzeugmaschinenanordnung 10" insgesamt als Feinbearbeitungsmaschine ausgebildet ist. Hierbei ist ein Feinbearbeitungswerkzeug 26' mittels eines Linearantriebs 40" und eines Rotationsantriebes 20" in Vorschubrichtung versetzbar und in Drehrichtung antreibbar, wie es in Fig. 4 bei v bzw. n angedeutet ist. Gegebenenfalls kann die Werkzeugmaschinenanordnung 10" dazu ausgebildet sein, den Schnellhub bis in eine Einfahrposition durch eine Bewegung des jeweiligen zu bearbeitenden Werkstückes realisiert werden.

In einer derartigen Werkzeugmaschine können eine Mehrzahl von Werkstücken 14a, 14b beispielsweise auf einer Werkstückaufnahme 84 angeordnet werden, die innerhalb eines Werkzeugmaschinengehäuses 82 angeordnet ist.

Die Werkstückaufnahme 84 kann als Drehteller ausgebildet sein, um jeweils ein Werkstück 14a, 14b in Ausrichtung mit einer Längsachse 18" des Feinbearbeitungswerkzeuges 26' zu bringen, wobei die Achse 18" bei dieser Ausführungsform vorzugsweise vertikal ausgerichtet ist.

Hierbei ist es ggf. auch nicht mehr nötig, eine Kardanlagerung 58 vorzusehen. Ob eine Kardanlagerung sinnvoll ist oder nicht, richtet sich insbesondere nach dem Durchmesser des Werkzeuges und der Einspannlänge. Nach Möglichkeit kann auch das Werkstück kardanisch gelagert sein.

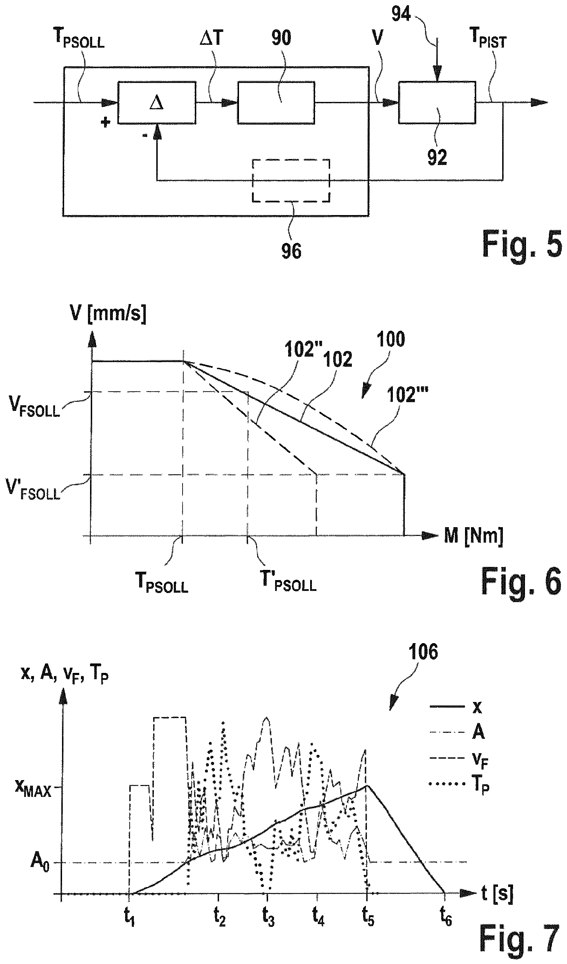

In Fig. 5 ist in schematischer Form ein Regelkreis dargestellt, der einen Stetigregler wie einen Proportionalregler 90 beinhaltet.

Der Regelkreis ist dazu ausgelegt, als Prozessgröße das relative Drehmoment T_{P} zwischen dem Werkzeug 26 und dem Werkstück 14 zu regeln. Der Prozess wird durch die Regelstrecke 92 repräsentiert. Auf die Regelstrecke 92 wirkt wenigstens eine Störgrö-ße 94. Es ergibt sich ein Istwert T_{PIST} des relativen Drehmomentes, der mittels des Drehmomentsensors 44 erfassbar ist.

Für den Prozess wird ferner ein Soll-Drehmoment T_{PSOLL} vorgegeben. In einem Differenzbildner Δ wird die Differenz zwischen dem Ist-Drehmoment T_{PIST} und dem Soll-Drehmoment T_{PSOLL} gebildet und als Differenzwert bzw. Regelabweichung ΔT in den Regler 90 eingegeben. Der Regler erzeugt hieraus eine Stellgröße, bei der es sich vorliegend um die relative Vorschubgeschwindigkeit v handelt. Mit dieser wird die Regelstrecke 92 beaufschlagt, wodurch dann mittelbar das Ist-Drehmoment T_{PIST} beeinflusst wird.

In der Rückführung von dem Ist-Drehmoment zu dem Differenzbildner kann ggf. ein Messwandler 96 vorgesehen sein, um eine andere ggf. erfassbare Prozessgröße rückzuführen und in einen entsprechenden Drehmomentwert umzuwandeln. Der Messwandler 96 kann beispielsweise eine Ausgabe eines Drehmomentsensors in Form eines Weges oder einer Federkraft in einen Drehmomentwert umsetzen.

Fig. 6 zeigt ein Diagramm 100 einer Regelcharakteristik von Stellgröße v über dem Drehmoment T.

Die Regelcharakteristik beinhaltet einen geradlinigen Abschnitt mit konstanter Vorschubgeschwindigkeit v bei v_{FSOLL}, der für ein Drehmoment T von 0 bis zu einem Soll-Drehmoment T_{PSOLL} vorgegeben ist. Bei diesem Wertepaar T_{PSOLL} v_{FSOLL} soll der Feinbearbeitungsprozess durchgeführt werden.

Sofern das Drehmoment T über diesen Wert ansteigt, wird die Vorschubgeschwindigkeit v verringert, und zwar proportional wie es durch den linearen Abschnitt der linearen Kennlinie 102 angedeutet ist.

Oberhalb eines maximalen Drehmomentes T_{MAX} wird die Vorschubgeschwindigkeit sofort auf 0 heruntergesetzt. Dies kann beispielsweise dann sein, wenn ein Axialanschlagsensor (beispielsweise 42' in Fig. 2) ein Signal ausgibt. Nach dem Verringern der Vorschubgeschwindigkeit v auf 0 kann anschließend ein Rückhub eingeleitet werden, was in Fig. 6 jedoch nicht näher dargestellt ist. Dies erfolgt in der Regel auch nicht im Rahmen der Regelung der Fig. 5.

In Fig. 6 ist gestrichelt dargestellt, dass die Steigung der Kennlinie 102 veränderbar ist. Eine steilere Kennlinie 102" bedeutet einen höheren Proportional-Wert des ProportionalReglers 90. Dieser spricht dann schneller auf Änderungen an, ggf. kann die Stabilität hierdurch etwas verringert werden.

Die Steigung der linearen Wegestrecke 102, 102" kann in geeigneter Weise angepasst werden, ggf. auch während des Betriebes.

Bei 102‴ ist ferner gezeigt, dass die Kennlinie nicht rein linear sein muss, sondern auch gebogen ausgeführt sein kann, um für unterschiedliche Regelabweichungen von dem Sollwert T_{PSOLL} unterschiedliche Steigungen der Kennlinie 102 bzw. Proportionalwerte zu erzielen.

Ferner ist in Fig. 6 gezeigt, dass der Arbeitspunkt nicht notwendigerweise am Ende der linearen Kennlinie 102 liegen muss, sondern auch auf der Kennlinie liegen kann, wie es in Fig. 6 bei T_{PSOLL'}, v_{FSOLL}, angedeutet ist. In diesem Fall kann für den Fall, dass ein Soll-Drehmoment unterschritten wird, die Vorschubgeschwindigkeit ggf. noch erhöht werden.

Fig. 7 zeigt ein Zeitablaufdiagramm 106 für einen Feinbearbeitungsprozess der erfindungsgemäßen Art.

In Fig. 7 sind über der Zeit t aufgetragen: die Position x des Schlittens, die axiale Auslenckraft A des Schiebers 62 gegenüber der Schlittenbasis 60, die Vorschubgeschwindigkeit v_{F} sowie das Drehmoment T_{P}.

Der Schieber 62 ist gegenüber der Schlittenbasis 60 immer leicht vorgespannt, so dass die Axialfederanordnung 64 der Fig. 2 immer in einer gewissen Vorspannung ist. Dadurch ist zum Zeitpunkt 0 die Auslenkkraft A₀ größer als 0.

Zum Zeitpunkt t₁ wird die Vorschubgeschwindigkeit v_{F} erhöht, und zwar auf einen relativ niedrigen Wert, bis eine Einfahrposition erreicht ist (zwischen t₁ und t₂). Anschließend wird die Vorschubgeschwindigkeit v_{F} darüber hinaus erhöht, so dass das Feinbearbeitungswerkzeug 26 sich schnell dem Werkstück 14 nähert. Dabei ist das Drehmoment T_{P} gleich Null.

Zum Zeitpunkt t₂ kontaktiert das Feinbearbeitungswerkzeug 26 das Werkstück 14, so dass das Drehmoment T_{P} ansteigt. Dies führt ebenfalls zu einer gewissen Auslenkung A, wobei der Schieber 62 auf die Schlittenbasis 60 zu gedrückt wird. Ferner verringert sich hierdurch die Vorschubgeschwindigkeit v_{F}.

Sobald das Drehmoment T_{P} das Soll-Drehmoment überschritten hat, wird die Vorschubgeschwindigkeit v_{F} entsprechend verringert.

Beispielsweise kann jedoch das Drehmoment T_{P} durch eine Verringerung der Vorschubgeschwindigkeit V_{F} stark absinken, wonach diese wiederum erhöht wird, wie es ab t₃ gezeigt ist.

Bei t₄ ist es umgekehrt. Hier ergibt sich ein relativ hohes Drehmoment T_{P}, wodurch die Vorschubgeschwindigkeit v_{F} abgesenkt wird.

Aufgrund der Eigenschaft des Proportionalreglers erfolgt dies quasi gleichzeitig, so dass eine sehr gute Regelung erreichbar ist.

Zum Zeitpunkt t₅ ist der maximale Wert x_{MAX} oder ein Wert kurz davor erreicht. Hierbei ist bereits der Schaftabschnitt 38 in Kontakt gekommen mit der zylindrischen Werkstückfläche 16. Zum Zeitpunkt t₅ erfolgt daher ein Rückhub bis hin zum Zeitpunkt t₆, wodurch wieder die Ausgangsposition erreicht ist, also der Schlitten wieder am Punkt xo angekommen ist.

Man erkennt, dass der Vorschub des Feinbearbeitungswerkzeugs 26 in das Werkstück 14 hinein und durch dieses hindurch kontinuierlich erfolgt, also kein Rückhub erforderlich ist, bis der Maximalwert x_{MAX} erreicht ist.

Im Gegensatz zu bekannten Verfahren kann hierdurch die Bearbeitungsgeschwindigkeit signifikant erhöht werden.

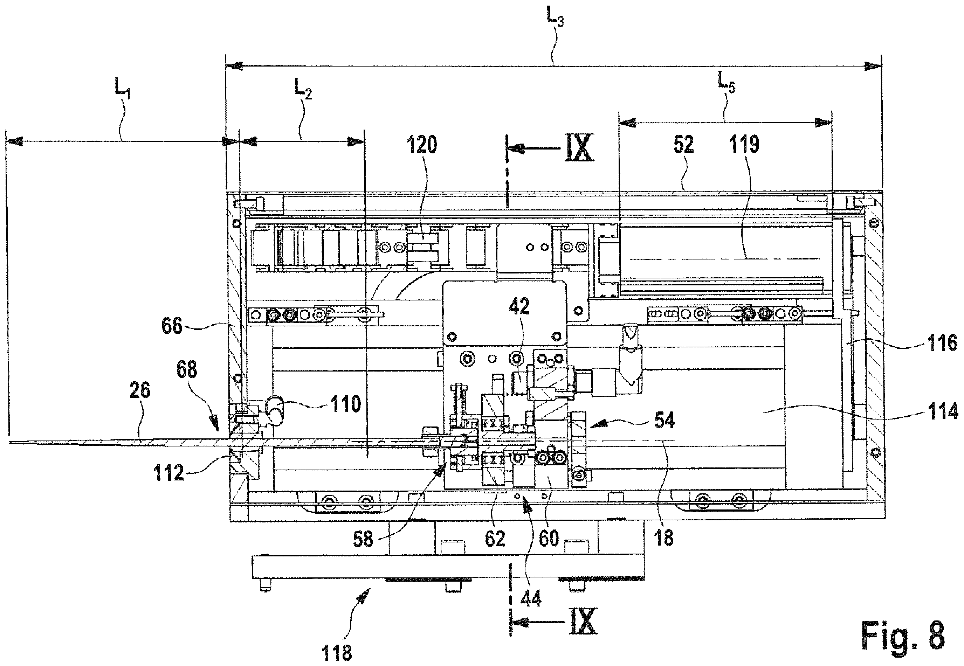

In den Fig. 8 bis 10 ist eine weitere Ausführungsform eines Feinbearbeitungsmoduls 50 gezeigt, das hinsichtlich Aufbau und Funktionsweise generell dem Feinbearbeitungsmodul 50 der Fig. 2 entspricht. Gleiche Elemente sind daher durch gleiche Bezugszeichen gekennzeichnet. Im Folgenden werden im Wesentlichen die Unterschiede erläutert.

Zum einen ist zu erkennen, dass die Werkzeugführung 68 eine Kühlmittelzufuhr 110 beinhalten kann, sowie Kühlmitteldüsen 112, über die das Kühlmittel auf die Oberfläche des durch die Werkzeugführung 68 hindurch geführten Feinbearbeitungswerkzeuges 26 aufgebracht werden kann.

Der Linearantrieb 40 enthält vorliegend eine Linearachse 114, an der der Schlitten 54 geführt ist, sowie ein Zugmittelgetriebe 116. Die Linearachse 114 beinhaltet einen Rotations/Translationswandler und setzt eine Drehbewegung des Zugmittelgetriebes 116 in entsprechende Linearbewegungen des Schlittens 54 um. Das Zugmittelgetriebe 116 ist ferner mit einem Antriebsmotor 119 gekoppelt, der eine Länge L₅ besitzt. Der Antriebsmotor 119 ist als elektrischer Antriebsmotor mit einer angedeuteten Drehachse ausgebildet, über die das Zugmittelgetriebe 116 angetrieben werden kann, so dass Drehbewegungen des Antriebsmotors 119 in die Linearachse 114 eingeleitet werden, um den Schlitten 54 linear zu bewegen.

An der Unterseite des Modulgehäuses 52 kann eine Montageplatte 118 ausgebildet sein, über die das Feinbearbeitungsmodul 50 an einer Werkzeugmontagestelle 78 einer Werkzeugmaschine 10' montierbar ist. Es versteht sich, dass hierbei durch geeignete Nivelierungsmittel eine Ausrichtung der Bearbeitungsachse 18 mit einer Achse der Spanneinrichtung 12' erreichbar sein kann.

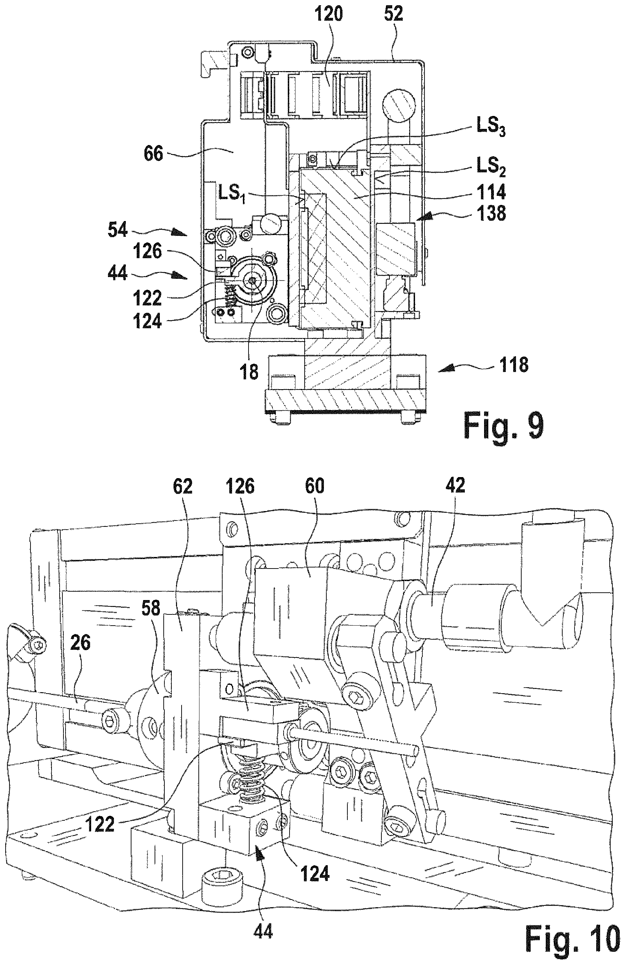

Wie es in Fig. 9 gezeigt ist, ist der Schlitten 54 auf einer Längsseite LS₁ der Linearachse 114 angeordnet. Auf einer benachbarten oberen Längsseite LS₃ ist eine Kabelführung bzw. Kabelkette 120 angeordnet, über die Signale von Sensoren des Schlittens 54 in entsprechenden Signalleitungen geführt werden können.

In Fig. 9 und 10 ist zudem gezeigt, dass der Drehmomentsensor 44 einen Hebel 122 beinhalten kann, der mit einer Spanneinrichtung bzw. einer Kardanlagerung 58 des Feinbearbeitungswerkzeuges 26 in Verbindung steht und radial gegenüber der Bearbeitungsachse 18 vorsteht. Der Hebel 122 ist über eine Feder 124 gegen einen Abstandssensor 126 vorgespannt.

Bei dem Auftreten von Drehmomenten zwischen dem Feinbearbeitungswerkzeug 26 und dem Werkstück 14 wird das Feinbearbeitungswerkzeug 26 in Umfangsrichtung ausgelenkt, wodurch der Hebel 122 sich gegen die Kraft der Feder 124 von dem Abstandssensor 126 weg bewegt. Der Abstandssensor 126 kann also ein dem Drehmoment entsprechendes, insbesondere proportionales Signal liefern.

In Fig. 9 ist gezeigt, dass auf einer der ersten Längsseite LS₁ in Querrichtung gegenüberliegenden Längsseite LS₂ eine Schnittstellen- und/oder eine Steuereinrichtung 128 angeordnet sein kann, die mit einer stationären, außerhalb des Modulgehäuses 52 angeordneten Steuervorrichtung 56 in Verbindung stehen kann. Die Schnittstellen und/oder Steuereinrichtung kann ein Ventil für Kühlmittel enthalten.

Die Kabelführung 120 ist an der dritten Längsseite LS₃ angeordnet.

Alle Bauelemente überschneiden sich in axialer Richtung mit der Linearachse 114. Folglich kann das Feinbearbeitungsmodul 50 axial kompakt realisiert werden.

In Fig. 8 und 10 ist ferner ein Axialkraftsensor 42 zu erkennen, der typischerweise ein analoger indirekter oder direkter Kraftmesssensor ist. Beispielsweise kann der Axialkraftsensor 42 einen Wegsensor beinhalten, der einen Weg des Schiebers 62 erfasst, der in Bezug auf die Schlittenbasis 60 axial vorgespannt ist. Vorliegend kann der Axialkraftsensor 42 dazu als Anschlagsensor ausgebildet sein, um den Wert der maximalen Auslenkung A_{MAX} zu erfassen. Ferner kann ein solcher Anschlagsensor typischerweise nahe bei A₀ schalten, so dass der Rest des Weges bis A_{MAX} als "Knautschzone" genutzt werden kann, bis der Vorschub gestoppt hat.

Es versteht sich ferner, dass an dem Modulgehäuse, insbesondere oberhalb der Linearachse 114, Endschalter für den Schlitten 54 vorgesehen sein können, die in Fig. 8 jedoch nicht näher bezeichnet sind.

Die Kardanlagerung 58 kann eine Gewichtskompensation beinhalten. Zur Prozessabsicherung kann im Bereich der Kardanlagerung ferner ein nicht näher bezeichneter Sensor für eine Überlast vorgesehen sein. Ferner kann ein Verbindungsstück zwischen dem Feinbearbeitungswerkzeug 26 und einer Werkzeugaufnahme der Kardanlagerung 58 als ein Überlast-Opferstück mit einer Sollbruchstelle vorgesehen sein, um für den Fall einer fatalen Fehlfunktion eine Beschädigung des Schlittens oder sonstiger Komponenten des Feinbearbeitungsmoduls 50 ausschließen zu können.

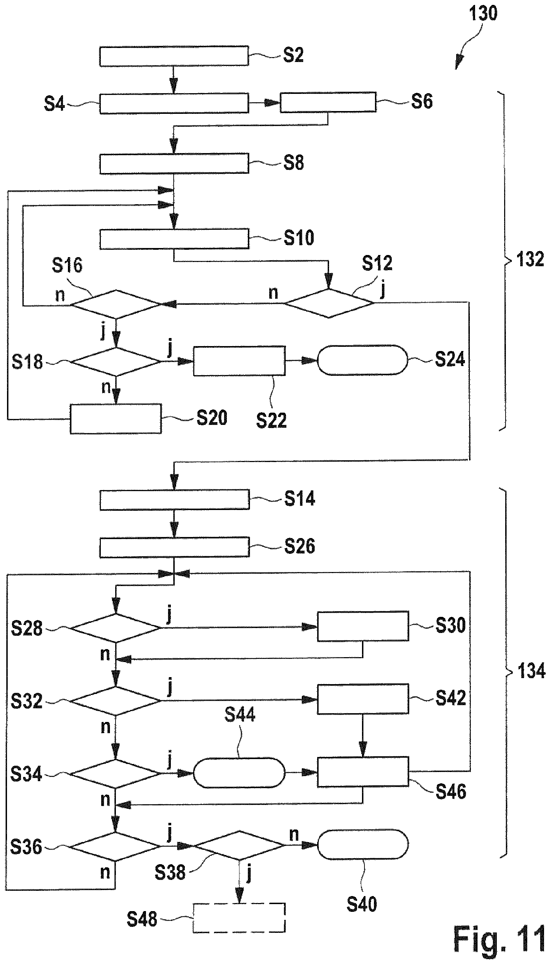

In Fig. 11 ist ein Flussdiagramm 130 dargestellt, das einen Prozess zur Feinbearbeitung einer zylindrischen Werkstückfläche eines Werkstückrohlings mittels eines Feinbearbeitungswerkzeuges darstellt.

Der Prozess beginnt mit einem Einfahrprozess 132, wodurch das Feinbearbeitungswerkzeug 26 bis in einer Position gebracht wird, bei der der Konusabschnitt 34 die Ringkante 17 gerade noch nicht berührt. Im Anschluss daran erfolgt der eigentliche Bearbeitungsprozess 134, wobei die relative Vorschubgeschwindigkeit noch einmal deutlich erhöht wird.

Mit dem Einfahrprozess 132 beginnt der Bearbeitungszyklus, und zwar bei S₂.

Anschließend wird eine axiale Soll-Auslenkungskraft auf "Einfahren" eingestellt. Ferner wird eine Drehzahl des Werkstückes oder des Werkzeuges auf "Einfahren" eingestellt, also auf eine relativ hohe Drehzahl (S₄).

Im Schritt S₆ wird ein Zähler für Rückhube auf "0" gesetzt.

In einem anschließenden Schritt S₈ wird eine relative Vorschubgeschwindigkeit v auf "Einfahren Vorschub" eingestellt.

Im Schritt S₁₀ erfolgt anschließend ein Einfahren des Feinbearbeitungswerkzeuges 26 in das Werkstück 14.

Im Schritt S₁₂ wird abgefragt, ob eine Einfahr-Position kurz vor einer BearbeitungsPosition (d.h. ein Kontakt zwischen Konusabschnitt 34 und Ringkante 17) bereits erreicht ist.

Wenn dies der Fall ist (ja in Schritt S₁₂), geht der Prozess über zum Bearbeitungsprozess 134, bei dem im Schritt S₁₄ zunächst die axiale Auslenkungskraft auf "maximales Bearbeiten" eingestellt wird. Ferner wird die Drehzahl des Werkstückes oder des Werkzeuges auf "Bearbeiten" eingestellt.

Im Schritt S₂₆ wird anschließend die Vorschubgeschwindigkeit auf "maximales Bearbeiten" eingestellt, entsprechend dem Wert v_{FSOLL} in Fig. 6.

Sofern die die Antwort im Schritt S₁₂ nein war, wird in Schritt S₁₆ abgefragt, ob eine axiale Auslenkungskraft oder ein Drehmoment für das "Einfahren" überschritten worden ist. Wenn dies nicht der Fall ist, geht das Verfahren zurück zum Beginn des Schrittes S₁₀. Wenn die Kraft oder das Drehmoment überschritten worden ist, wird im Schritt S₁₈ abgefragt, ob ein Zähler für eine maximale Anzahl von Rückhuben überschritten worden ist.

Wenn dies nicht der Fall ist, wird der Zähler für Rückhube im Schritt S₂₀ inkrementiert und das Verfahren und das Verfahren geht zurück zum Anfang des Schrittes S₁₀. Wenn die maximale Anzahl der Rückhube überschritten worden ist, wird im Schritt S₂₂ ein Zyklus "Abbrechen" durchgeführt. Es erfolgt eine Fehlermeldung "Einfahren nicht möglich" und der Schlitten 54 wird zurück auf eine "Ladeposition" gefahren. Das Bearbeiten wird abgebrochen (S₂₄).

In dem Bearbeitungsprozess wird nach dem Schritt S₂₆ ein Schritt S₂₈ durchgeführt, bei dem abgefragt wird, ob ein Bearbeitungs-/Drehmoment T_{P} anliegt. Wenn dies der Fall ist, wird im Schritt S₃₀ die Regelung gemäß Fig. 5, Fig. 6 durchgeführt, wobei die Vorschubgeschwindigkeit gemäß der Regler-Einstellung (z.B. linear-proportional) eingestellt wird.

Nach den Schritten S₂₈ und S₃₀ wird in Schritt S₃₂ abgefragt, ob ein Drehmoment-Schwellenwert überschritten worden ist oder eine Maximalauslenkung A überschritten worden ist. Wenn eine dieser Bedingungen erfüllt ist, wird im Schritt S₄₂ der Vorschub gestoppt, und im Schritt Sas erfolgt ein Rückhub, sowie anschließend wieder ein Anfahren gemäß Parametrisierung, d.h. zurück zum Anfang von Schritt S₂₈.

Sofern im Schritt S₃₂ keine der Bedingungen erfüllt ist, wird im Schritt S₃₄ abgefragt, ob die maximale Bearbeitungszeit überschritten worden ist. Wenn dies der Fall ist, erfolgt im Schritt S₄₄ eine Rückfahrt auf die "Ladeposition", und das Bearbeiten wird abgebrochen. Beispielsweise kann das der Fall sein, wenn eine von dem Spanwerkzeug 24 hergestellte Bohrung einen zu geringen Durchmesser D₃ hat.

Im Schritt S₃₆ (nein im Schritt S₃₄) wird abgefragt, ob eine Bearbeitungs-Endposition erreicht ist (entsprechend x_{MAX} in Fig. 7). Wenn dies der Fall ist, ist der Bearbeitungsprozess 134 beendet. Hierbei kann im Schritt Sas abgefragt werden, ob ein sogenanntes "Ausfunken" erfolgen soll.

Unter einem Ausfunken wird vorliegend verstanden, dass das Bearbeitungswerkzeug mit dem Schaftabschnitt noch wenigstens ein- oder zweimal innerhalb der Bohrung vor und zurück bewegt wird, um eine kalibrierte Oberfläche zu erzielen.

Wenn kein Ausfunken erfolgen soll, erfolgt im Schritt S₄₀ eine Rückfahrt auf die Ladeposition, und der Bearbeitungsprozess ist abgeschlossen.

Anderenfalls erfolgt im Schritt Sas ein Ausfunk-Prozess.

## Patentansprüche

1. Feinbearbeitungsmodul (50) für eine Werkzeugmaschine (10), insbesondere eine Drehmaschine, mit einem Modulgehäuse (52, 118), mittels dessen das Feinbearbeitungsmodul (50) an einer Werkzeugmontagestelle (78) einer Werkzeugmaschine (10) befestigbar ist, und mit einem rotationssymmetrischen Feinbearbeitungswerkzeug zur Innen- und/oder Außenfeinbearbeitung einer zylindrischen Werkstückfläche (16) eines Werkstückrohlings (14), wobei das Feinbearbeitungswerkzeug (26) eine vorbestimmte axiale Werkzeuglänge (L₁ + L₂) mit einem ersten Werkzeugende (30) und einem zweiten Werkzeugende (32) aufweist,
**dadurch gekennzeichnet, dass**
- das Feinbearbeitungsmodul einen Linearantrieb (40) aufweist, der an dem Modulgehäuse (52) festgelegt und dazu ausgebildet ist, einen Schlitten (54) parallel zu einer Bearbeitungslängsachse (18) zu bewegen,
- das Feinbearbeitungswerkzeug (26) im Bereich seines ersten Werkzeugendes (30) an dem Schlitten gelagert ist, und dass
- an dem Modulgehäuse (52, 118) eine Werkzeugführung (68) ausgebildet ist, durch die hindurch sich das zweite Werkzeugende (32) erstreckt.

2. Feinbearbeitungsmodul nach Anspruch 1, **dadurch gekennzeichnet, dass** das Feinbearbeitungsmodul (50) eine axiale Modullänge (L₃) aufweist, wobei ein Verhältnis der axialen Modullänge (L₃) zu einem axialen Maximalfahrweg (L₄) des Linearantriebes (40) in einem Bereich von 1,1:1 bis 2,5:1 liegt.

3. Feinbearbeitungsmodul nach Anspruch 1 oder 2, wobei der Linearantrieb (40) eine Linearachse (114) für den Schlitten (54) und einen Antriebsmotor (119) aufweist und/oder wobei eine Antriebsachse eines Antriebsmotors (119) und eine Linearachse (114) parallel ausgerichtet sind und/oder wobei ein Antriebsmotor (119) und eine Linearachse (114) axial überlappend angeordnet sind und/oder wobei der Antriebsmotor und die Linearachse im Bereich von einem axialen Modulende des Feinbearbeitungsmoduls (50) über ein Zugmittelgetriebe (116) oder einen Stirnradsatz gekoppelt sind, und/oder wobei ein Antriebsmotor ein elektrischer Linearmotor mit einem axial beweglichen Anker ist, der die Linearachse bildet.

4. Feinbearbeitungsmodul nach einem der Ansprüche 1 - 3, **dadurch gekennzeichnet, dass** der Schlitten (54) an einer ersten Längsseite (LS₁) einer Linearachse (114) des Linearantriebs (40) angeordnet ist und wobei eine Schnittstellen- und/oder eine Steuereinrichtung (128) an einer zweiten Längsseite (LS₂) der Linearachse (114) angeordnet ist.

5. Feinbearbeitungsmodul nach Anspruch 4, **dadurch gekennzeichnet, dass** die zweite Längsseite (LS₂), an der die Schnittstellen- und/oder Steuereinrichtung (128) angeordnet ist, der ersten Längsseite (LS₁) gegenüberliegt, und/oder wobei eine flexible Kabelführung (120) zur Verbindung der Schnittstellen- und/oder Steuereinrichtung (128) und des Schlittens (54) an einer dritten Längsseite (LS₃) angeordnet ist, die zwischen der ersten Längsseite (LS₁) und der zweiten Längsseite (LS₂) liegt.

6. Feinbearbeitungsmodul nach einem der Ansprüche 1 - 5, **dadurch gekennzeichnet, dass** der Schlitten (54) eine Schlittenbasis (60) und einen Schieber (62) aufweist, der an der Schlittenbasis (60) zumindest begrenzt axial verschieblich gelagert ist, wobei das Feinbearbeitungswerkzeug (26) im Bereich seines ersten Werkzeugendes (30) an dem Schieber (62) gelagert ist.

7. Feinbearbeitungsmodul nach Anspruch 6, **dadurch gekennzeichnet, dass** der Schieber (62) gegenüber der Schlittenbasis (60) axial vorgespannt ist und/oder wobei eine axiale Verschiebung (A) des Schiebers (62) in Bezug auf die Schlittenbasis (60) mittels eines Axialversatzsensors (42) erfassbar ist.

8. Feinbearbeitungsmodul nach einem der Ansprüche 1 - 7, **dadurch gekennzeichnet, dass** das erste Werkzeugende (30) des Feinbearbeitungswerkzeuges (26) an dem Schlitten (54) zumindest begrenzt verdrehbar gelagert ist und/oder wobei eine Verdrehung des ersten Werkzeugendes (30) des Feinbearbeitungswerkzeuges (26) gegenüber dem Schlitten (54) mittels eines Verdrehsensors (44) erfassbar ist.

9. Feinbearbeitungsmodul nach einem der Ansprüche 1 - 8, **dadurch gekennzeichnet, dass** das Feinbearbeitungswerkzeug (26) im Bereich des ersten Werkzeugendes (30) kardanisch an dem Schlitten (54) gelagert ist.

10. Werkzeugmaschine (10) mit
- einer Spanneinrichtung (12) für ein Werkstück (14), das eine zu bearbeitende zylindrische Werkstückfläche (16) aufweist,
- einem Rotationsantrieb (20) zum Rotieren des Werkstückes (14) um eine Bearbeitungsachse (18) herum und
- einem Feinbearbeitungsmodul (50) nach einem der Ansprüche 1 - 9.

11. Verfahren zur Bearbeitung eines Werkstückes (14), insbesondere mittels einer Werkzeugmaschine (10) nach Anspruch 10, mit den Schritten:
- Einspannen eines Werkstückrohlings (14);
- Rotieren des Werkstückrohlings (14) und Bearbeiten des Werkstückrohlings (14) mittels eines Spanwerkzeuges (24), um einen Werkstückrohling mit einer zylindrischen Werkstückfläche (16) zu erzeugen;
- Beibehalten der Einspannung des Werkstückrohlings (14) und Feinbearbeiten der zylindrischen Werkstückfläche mittels eines Feinbearbeitungsmoduls (50) nach einem der Ansprüche 1 - 9.

12. Verfahren nach Anspruch 11, wobei der Werkstückrohling (14) in dem Feinbearbeitungsschritt mit einer konstanten Drehzahl (nw) angetrieben wird.

## Claims

1. Fine machining module (50) for a machine tool (10), in particular a lathe, comprising a module housing (52, 118), by means of which the fine machining module (50) is attachable to a tool mounting point (78) of a machine tool (10), and a rotationally symmetrical fine machining tool for internal and/or external fine machining of a cylindrical workpiece surface (16) of a workpiece blank (14), the fine machining tool (26) having a predetermined axial tool length (L₁ + L₂) with a first tool end (30) and a second tool end (32),
**characterized in that**
- the fine machining module comprises a linear drive (40) which is fixed to the module housing (52) and is designed to move a slide (54) parallel to a longitudinal machining axis (18),
- the fine machining tool (26) is mounted on the slide in the region of its first tool end (30), and **in that**
- a tool guide (68) is formed on the module housing (52, 118), through which the second tool end (32) extends.

2. Fine machining module according to claim 1, **characterized in that** the fine machining module (50) has an axial module length (L₃), wherein a ratio of the axial module length (L₃) to an axial maximum travel distance (L₄) of the linear drive (40) is in a range of 1.1:1 to 2.5:1.

3. Fine machining module according to claim 1 or 2, wherein the linear drive (40) has a linear axis (114) for the slide (54) and a drive motor (119) and/or wherein a drive axis of a drive motor (119) and a linear axis (114) are aligned in parallel and/or wherein a drive motor (119) and a linear axis (114) are arranged axially overlapping and/or wherein the drive motor and the linear axis are coupled in the region of an axial module end of the fine machining module (50) via a traction gear (116) or a spur gear set, and/or wherein a drive motor is an electric linear motor with an axially movable armature which forms the linear axis.

4. Fine machining module according to any one of the claims 1 - 3, **characterized in that** the carriage (54) is arranged at a first longitudinal side (LS₁) of a linear axis (114) of the linear drive (40) and wherein an interface and/or a control device (128) is arranged at a second longitudinal side (LS₂) of the linear axis (114).

5. Fine machining module according to claim 4, **characterized in that** the second longitudinal side (LS₂), on which the interface and/or control device (128) is arranged, is opposite the first longitudinal side (LS1), and/or wherein a flexible cable guide (120) for connecting the interface and/or control device (128) and the carriage (54) is arranged on a third longitudinal side (LS₃), which is located between the first longitudinal side (LS₁) and the second longitudinal side (LS₂).

6. Fine machining module according to any one of claims 1 - 5, **characterized in that** the carriage (54) has a carriage base (60) and a slide (62), which is mounted on the carriage base (60) so as to be axially displaceable at least to a limited extent, wherein the fine machining tool (26) is mounted on the slide (62) in the region of its first tool end (30).

7. Fine machining module according to claim 6, **characterized in that** the slide (62) is axially preloaded relative to the slide base (60) and/or wherein an axial displacement (A) of the slide (62) relative to the slide base (60) is detectable by means of an axial displacement sensor (42).

8. Fine machining module according to any one of claims 1 - 7, **characterized in that** the first tool end (30) of the fine machining tool (26) is mounted on the slide (54) so as to be rotatable at least to a limited extent and/or wherein a rotation of the first tool end (30) of the fine machining tool (26) relative to the slide (54) is detectable by means of a rotation sensor (44).

9. Fine machining module according to any one of claims 1 - 8, **characterized in that** the fine machining tool (26) is mounted cardanically on the slide (54) in the region of the first tool end (30).

10. Machine tool (10) comprising
- a clamping device (12) for a workpiece (14) having a cylindrical workpiece surface (16) to be machined,
- a rotary drive (20) for rotating the workpiece (14) about a machining axis (18), and
- a fine machining module (50) according to any one of claims 1 - 9.

11. Method for machining a workpiece (14), in particular by means of a machine tool (10) according to claim 10, comprising the steps:
- clamping a workpiece blank (14);
- rotating the workpiece blank (14) and machining the workpiece blank (14) by means of a cutting tool (24) to produce a workpiece blank having a cylindrical workpiece surface (16);
- maintaining the clamping of the workpiece blank (14) and finishing the cylindrical workpiece surface by means of a fine machining module (50) according to any one of claims 1 - 9.

12. The method according to claim 11, wherein the workpiece blank (14) is driven at a constant speed (nW) in the fine machining step.

## Revendications

1. Module de finissage (50) pour une machine-outil (10), notamment un tour, avec un logement de module (52, 118) au moyen duquel le module de finissage (50) peut être fixé à un endroit de montage d'outil (78) d'une machine-outil (10), et avec un outil de finissage à symétrie de rotation pour le finissage interne et/ou externe d'une face de pièce à usiner cylindrique (16) d'une ébauche de pièce à usiner (14), dans lequel l'outil de finissage (26) présente une longueur d'outil axiale prédéterminée (L₁ + L₂) avec une première extrémité d'outil (30) et une seconde extrémité d'outil (32),
**caractérisé en ce que**
- le module de finissage présente un entraînement linéaire (40) qui est fixé au logement de module (52) et réalisé pour déplacer un chariot (54) parallèlement à un axe longitudinal d'usinage (18),
- l'outil de finissage (26) est logé sur le chariot dans la région de sa première extrémité d'outil (30), et que
- un guidage d'outil (68) est réalisé sur le logement de module (52, 118), à travers lequel la seconde extrémité d'outil (32) s'étend.

2. Module de finissage selon la revendication 1, **caractérisé en ce que** le module de finissage (50) présente une longueur de module axiale (L₃), dans lequel un rapport de la longueur de module axiale (L₃) sur un trajet axial maximal (L₄) de l'entraînement linéaire (40) se situe dans une région de 1,1/1 à 2,5/1.

3. Module de finissage selon la revendication 1 ou 2, dans lequel l'entraînement linéaire (40) présente un axe linéaire (114) pour le chariot (54) et un moteur d'entraînement (119) et/ou dans lequel un axe d'entraînement d'un moteur d'entraînement (119) et un axe linéaire (114) sont orientés parallèlement et/ou dans lequel un moteur d'entraînement (119) et un axe linéaire (114) sont disposés de manière chevauchante axialement et/ou dans lequel le moteur d'entraînement et l'axe linéaire sont accouplés dans la région d'une extrémité de module axiale du module de finissage (50) par le biais d'un engrenage à traction (116) ou d'un ensemble de roues frontales, et/ou dans lequel un moteur d'entraînement est un moteur linéaire électrique avec une ancre mobile axialement qui forme l'axe linéaire.

4. Module de finissage selon une des revendications 1 à 3, **caractérisé en ce que** le chariot (54) est disposé sur un premier côté longitudinal (LS₁) d'un axe linéaire (114) de l'entraînement linéaire (40) et dans lequel un dispositif d'interface et/ou de commande (128) est disposé sur un deuxième côté longitudinal (LS₂) de l'axe linéaire (114).

5. Module de finissage selon la revendication 4, **caractérisé en ce que** le deuxième côté longitudinal (LS₂) sur lequel le dispositif d'interface et/ou de commande (128) est disposé s'oppose au premier côté longitudinal (LS₁), et/ou dans lequel un guidage de câble flexible (120) pour la connexion du dispositif d'interface et/ou de commande (128) et du chariot (54) est disposé sur un troisième côté longitudinal (LS₃) qui se situe entre le premier côté longitudinal (LS₁) et le deuxième côté longitudinal (LS₂).

6. Module de finissage selon une des revendications 1 à 5, **caractérisé en ce que** le chariot (54) présente une base de chariot (60) et un coulisseau (62) qui est logé de manière coulissante axialement au moins limitée sur la base de chariot (60), dans lequel l'outil de finissage (26) est logé sur le coulisseau (62) dans la région de sa première extrémité d'outil (30).

7. Module de finissage selon la revendication 6, **caractérisé en ce que** le coulisseau (62) est précontraint axialement par rapport à la base de chariot (60) et/ou dans lequel un décalage axial (A) du coulisseau (62) par rapport à la base de chariot (60) peut être détecté au moyen d'un capteur de décalage axial (42).

8. Module de finissage selon une des revendications 1 à 7, **caractérisé en ce que** la première extrémité d'outil (30) de l'outil de finissage (26) est logée de manière rotative au moins limitée sur le chariot (54) et/ou dans lequel une rotation de la première extrémité d'outil (30) de l'outil de finissage (26) par rapport au chariot (54) peut être détectée au moyen d'un capteur de rotation (44).

9. Module de finissage selon une des revendications 1 à 8, **caractérisé en ce que** l'outil de finissage (26) est logé à Cardan sur le chariot (54) dans la région de la première extrémité d'outil (30).

10. Machine-outil (10) avec
- un dispositif de serrage (12) pour une pièce à usiner (14) qui présente une face de pièce cylindrique à usiner (16),
- un entraînement rotatif (20) pour la rotation de la pièce à usiner (14) autour d'un axe d'usinage (18) et
- un module de finissage (50) selon une des revendications 1 à 9.

11. Procédé d'usinage d'une pièce à usiner (14), notamment au moyen d'une machine-outil (10) selon la revendication 10, avec les étapes de :
- serrage d'une ébauche de pièce à usiner (14) ;
- rotation de l'ébauche de pièce à usiner (14) et usinage de l'ébauche de pièce à usiner (14) au moyen d'un outil d'alésure (24) pour produire une ébauche de pièce à usiner avec une face de pièce à usiner cylindrique (16) ;
- conservation du serrage de l'ébauche de pièce à usiner (14) et finissage de la face de pièce à usiner cylindrique au moyen d'un module de finissage (50) selon une des revendications 1 à 9.

12. Procédé selon la revendication 11, dans lequel l'ébauche de pièce à usiner (14) est entraînée dans l'étape de finissage avec une vitesse de rotation constante (nW).
